# EUROPÄISCHE PATENTSCHRIFT

(11) **EP 2 065 351 B1**
(45) Veröffentlichungstag und Bekanntmachung des Hinweises auf die Patenterteilung: **26.01.2011**
(21) Anmeldenummer: 07119513.5
(22) Anmeldetag: 29.10.2007
(51) Int. Cl.: C04B 24/26, C04B 28/02, C08F 220/06, C08F 220/32, C08F 222/06, C08F 290/06

(54) **Dispergiermittel für hydraulisch abbindende Systeme**
Dispersing agent for hydraulically setting systems
Agent dispersant pour systèmes à prise hydraulique

(43) Veröffentlichungstag der Anmeldung: 03.06.2009
(73) Patentinhaber: Sika Technology AG, 6340 Baar (CH)
(72) Erfinder: Hampel, Christina, 8102, Oberengstringen (CH); Al Shemari, Jabbar, 8052, Zürich (CH); Velten, Ulf, 8102, Oberengstringen (CH); Sulser, Ueli, 8103, Unterengstringen (CH)
(74) Vertreter: Sika Patent Attorneys

(56) Entgegenhaltungen:
- FR-A- 2 851 937
- GB-A- 764 021

## Beschreibung

### Technisches Gebiet

Die vorliegende Erfindung betrifft das Gebiet der Zusatzmittel für hydraulisch abbindende Systeme, insbesondere der Dispergiermittel für Betonzusammensetzungen.

### Stand der Technik

Polymere aus α- β-ungesättigten Carbonsäuren mit Polyalkylenglykol-Seitenketten werden bereits seit längerem in der Betontechnologie als Dispergiermittel, insbesondere als Verflüssiger, wegen ihrer starken Wasserreduktion eingesetzt. Diese Polymere haben eine Kammpolymerstruktur. Beispiele solcher Polymere sind beispielsweise in der Patentschrift FR 2 851 937 A beschrieben. GB 764 021 beschreibt ein Verfahren zur Herstellung einer wässrigen Dispersion unter Verwendung von Methacrylsäureestern. Es gibt eine Reihe von solchen Kammpolymeren, welche neben Ester- und Carbonsäure-Gruppen auch Amidgruppen aufweisen.
Trotz der Verbesserung bezüglich der Verflüssigung ist es jedoch immer noch eine Herausforderung, sich den verschiedenen Anforderungen der Baustellen weltweit anzupassen. Das ist den verschiedenen Arten von Klimas, Zementen, Aggregaten, Zementersatzfüllstoffen usw. zuzuschreiben, sowie dem breiten Anwendungsgebiet wie Fertig-, Transport-, Spritzbeton, selbstverdichtender Beton oder vor Ort gemischter Beton, wo die Zusätze ab und zu völlig verschiedenen Erfordernissen genügen müssen.
Man ist daher stetig auf der Suche nach neuen Zusatzmitteln, welche als Dispergiermittel, insbesondere als Verflüssiger für hydraulisch abbindende Systeme verwendet werden können. Das Problem bei den bekannten Kammpolymeren, welche als Verflüssiger eingesetzt werden können, besteht zudem darin, dass aufgrund der kammartigen tensidischen Struktur dieser Polymere beim Einarbeiten eine beträchtliche Menge an Luft in mineralische Baustoffe eingeführt werden kann. Durch solche Luftporen werden im Beton Hohlräume gebildet, was zu einer Verschlechterung der mechanischen Eigenschaften und Beständigkeit des Betons führen kann.
Die bekannten Betondispergiermittel erreichen zudem oft nur im Beton befriedigende verflüssigende Resultate und sind für Gipszusammensetzungen nur bedingt geeignet. Sie erreichen im Gips entweder nur eine relativ geringe Verflüssigung und müssen daher in hohen Dosierungen eingesetzt werden, oder sie verzögern so stark, dass die Gipszusammensetzung kaum noch abbindet. Als Gipsverflüssiger wurden bisher beispielsweise Melamin- und Naphthalin-Sulfonsäure-Formaldehyd Kondensate eingesetzt. Diese Verflüssiger sind jedoch wegen der Freisetzung des toxischen Formaldehyds ökologisch problematisch und daher nicht erwünscht.
Es besteht daher das Bedürfnis, Polymere herstellen zu können, welche einerseits sowohl in Betonzusammensetzungen wie auch in Gipszusammensetzungen eine ausreichende verflüssigende Wirkung zeigen und andererseits eine geringe Menge an Luftporen in hydraulisch abbindende Systeme einbringen.

### Darstellung der Erfindung

Aufgabe der vorliegenden Erfindung ist es daher, Dispergiermittel zur Verfügung zu stellen, bei denen die Nachteile des Standes der Technik überwunden werden, und welche geeignet sind, eine ausreichende Verflüssigungswirkung von hydraulisch abbindenden Zusammensetzungen, insbesondere von Beton und Gips, zu erzielen.
Überraschenderweise wurde gefunden, dass dies durch ein Polymer **P** gemäss Anspruch 1 erreicht werden kann. Es konnte nun überraschend festgestellt werden, dass ein Polymer **P**, welches mindestens eine Säureeinheit, mindestens eine Estereinheit, mindestens eine Einheit, welche eine Tetrahydrofurfurylgruppe enthält, sowie gegebenenfalls mindestens eine Amideinheit umfasst, hervorragend geeignet ist, um verschiedene hydraulisch abbindende Zusammensetzungen zu dispergieren beziehungsweise zu verflüssigen, ohne dass es in grosser Menge eingesetzt werden muss. Dies ermöglicht sowohl eine ökonomische wie auch ökologische Anwendung des erfindungsgemässen Polymers.
Die Erfindung umfasst zudem die Verwendung der erfindungsgemässen Polymere **P** als Verflüssiger für hydraulisch abbindende Zusammensetzungen sowie als Dispergiermittel für wässrige Dispersionen. Zudem umfasst die Erfindung ein Bindemittel enthaltendes Gemisch umfassend mindestens ein Bindemittel und mindestens ein Polymer P, sowie die Herstellung solcher Bindemittel enthaltenden Gemische. Weitere vorteilhafte Ausgestaltungen der Erfindung ergeben sich aus den Unteransprüchen.

### Wege zur Ausführung der Erfindung

Die vorliegende Erfindung betrifft ein Estergruppen aufweisendes Polymer P umfassend
(a) mindestens eine Struktureinheit A der Formel (I); 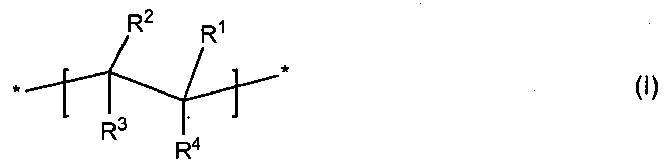
(b) mindestens eine Struktureinheit B der Formel (II); 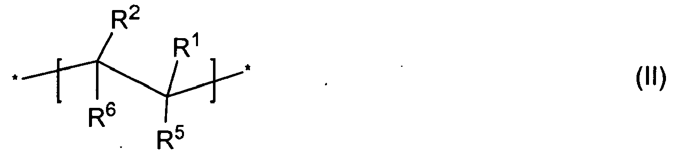
(c) mindestens eine Struktureinheit C der Formel (III); 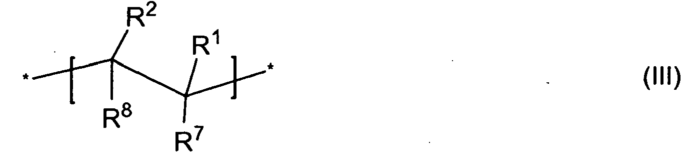 gegebenenfalls
(d) mindestens eine Struktureinheit D der Formel (IV); 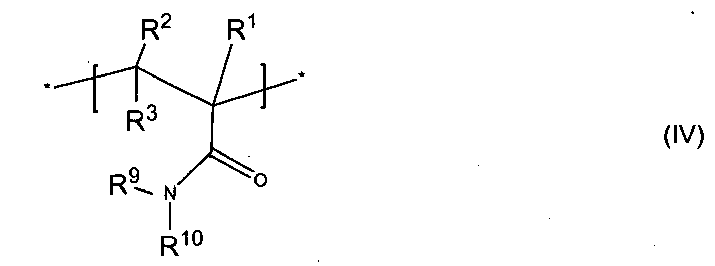 und gegebenenfalls
(e) mindestens eine weitere Struktureinheit **E**.

Dabei steht R¹ für H, CH₂COOM oder eine Alkylgruppe mit 1 bis 5 Kohlenstoffatomen, insbesondere H oder CH₃, R² steht für H, eine Alkylgruppe mit 1 bis 5 Kohlenstoffatomen, COOM oder CH₂COOM, insbesondere H; R³ steht für H, CH₃, COOM oder CH₂COOM, insbesondere H; und R⁴ steht für COOM; oder R³ kann mit R⁴ einen Ring bilden zu -CO-O-CO-.
M bedeutet H, einen C₁ - C₅-Alkylrest, Alkalimetall, Erdalkalimetall oder andere zwei- oder dreiwertige Metallatome, Ammonium, Ammoniumkation, eine organische Ammoniumgruppe, oder eine Mischung davon. M kann insbesondere ein Kation, insbesondere H⁺, Na⁺, Ca⁺⁺/2, Mg⁺⁺/2, NH₄⁺ oder ein organisches Ammonium darstellen. Es ist dem Fachmann klar, dass bei den mehrwertigen Ionen ein weiteres Gegenion vorhanden sein muss, das unter anderem auch ein Carboxylat desselben oder eines anderen Moleküls des Polymers **P** sein kann. Die Ammoniumverbindungen sind insbesondere Tetraalkylammonium oder aber HR₃N⁺, wobei R eine Alkylgruppe insbesondere eine C₁- bis C₆-Alkylgruppe, bevorzugt Ethyl oder Butyl, darstellt. Ammoniumionen werden insbesondere durch die Neutralisation der Carboxylgruppe mit handelsüblichen tertiären Aminen erhalten.
Besonders bevorzugt ist ein Polymer P, bei dem R¹ CH₃ ist und R², R³ und M für H stehen.
R⁵ steht unabhängig voneinander für 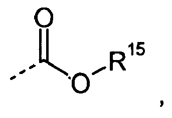 wobei R¹⁵ für -[(R¹¹O)ₓ-(R¹²O)_{y}-(R¹³O)_{z}]-R¹⁴ steht, und R¹¹, R¹² und R¹³ je unabhängig voneinander eine C₂ - C₄ Alkylengruppe bedeutet mit einer Reihenfolge der (R¹¹O)-, (R¹²O)-, und (R¹³O)-Einheiten in irgendeiner möglichen Sequenz. R¹⁴ steht für H, einen C₁ - C₁₂ Alkyl- oder Cycloalkylrest, einen C₇ - C₂₀ Alkylaryl- oder Aralkylrest, oder einen substituierten oder unsubstituierten Arylrest, und x, y, z weisen unabhängig voneinander je die Werte 0 - 250 auf und x+y+z = 3 - 250.
R⁶ steht unabhängig voneinander für H, CH₃, COOM, CH₂COOM oder einen Substituenten wie für R⁵ oder R⁷ definiert. Vorzugsweise steht R⁶ für H.
R⁷ steht unabhängig voneinander für einen Rest der Formel (V): 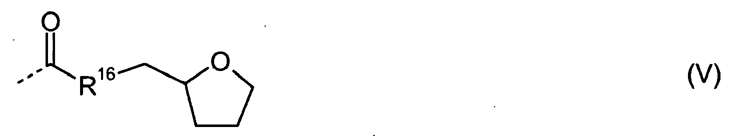 wobei R¹⁶ unabhängig voneinander für NH, -NH-(R¹⁷)_{q} -, O, oder -O-(R¹⁸)ₛ- steht, R¹⁷ und R¹⁸ je unabhängig voneinander für eine C₁ - C₁₂ Alkylengruppe, oder eine oder mehrere C₂ - C₄ Oxyalkylengruppen mit einer Reihenfolge in irgendeiner möglichen Sequenz, stehen; wobei q unabhängig voneinander eine ganze Zahl ist und den Wert 1 aufweist, falls R¹⁷ eine C₁ - C₁₂ Alkylengruppe ist, und je den Wert 1 - 150 aufweist, falls R¹⁷ eine oder mehrere C₂ - C₄ Oxyalkylengruppen ist; und wobei s unabhängig voneinander eine ganze Zahl ist und den Wert 1 aufweist, falls R¹⁸ eine C₁ - C₁₂ Alkylengruppe ist, und je den Wert 1 - 150 aufweist, falls R¹⁸ eine oder mehrere C₂ - C₄ Oxyalkylengruppen ist.
R⁸ steht unabhängig voneinander für H, CH₃, COOM, CH₂COOM oder einen Substituenten wie für R⁵ oder R⁷ definiert. Vorzugsweise steht R⁸ für H.
R⁹ und R¹⁰ können zusammen einen Ring bilden, der gegebenenfalls Sauerstoff-, Schwefel- oder weitere Stickstoffatome enthält, oder
R⁹ und R¹⁰ stellen unabhängig voneinander H, eine C₁ - C₂₀ Alkylgruppe, eine C₅ - C₉ Cycloalkyl-Gruppe, eine C₇ - C₁₂ Aralkyl-Gruppe, eine Hydroxyalkylgruppe oder eine Verbindung der Formel (VI), (VII) oder (VIII) dar,

-R¹⁹-X(R²⁰)ᵣ (VI)

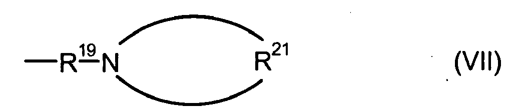

-[(R^{11'}O)_{x'}-(R^{12'}O)_{y'}-(R^{13'}O)_{z'}]- R^{14'} (VIII)

wobei R¹⁹ unabhängig voneinander eine Alkylengruppe und R²⁰ unabhängig voneinander eine C₁- bis C₄-Alkylgruppe, und X unabhängig voneinander ein S, O oder N darstellt, wobei r = 1, falls X= S oder O, oder r = 2, falls X = N; wobei R²¹ eine Alkylengruppe mit gegebenenfalls Heteroatomen ist und mit dem Stickstoffatom einen 5-er- bis 8-er-Ring, insbesondere einen 6-er-Ring bildet; und wobei R^{11'}, R^{12'} und R^{13'} je unabhängig voneinander eine C₂ - C₄ Alkylengruppe bedeutet mit einer Reihenfolge der (R^{11'}O)-, (R^{12'}O)-, und (R^{13'}O)-Einheiten in irgendeiner möglichen Sequenz; und wobei R^{14'} für einen C₁ - C₁₂ Alkyl- oder Cycloalkylrest, einen C₇ - C₂₀ Alkylaryl- oder Aralkylrest, oder einen substituierten oder unsubstituierten Arylrest steht. R⁹ kann sowohl für Reste stehen, wie sie für R^{9'} in der Formel (XI) definiert sind, aber auch für Reste, wie sie für R^{9''} in der Formel (XI') definiert sind. Ebenso kann R¹⁰ sowohl für Reste stehen, wie sie für R^{10'} in der Formel (XI) definiert sind, aber auch für Reste, wie sie für R^{10''} in der Formel (XI') definiert sind.
Die Indizes x', y', z' weisen unabhängig voneinander je die Werte 0 - 100 auf und x'+y'+z' = 1 - 100.

In einer bevorzugten Ausführungsform stehen im Polymer **P** der Rest R¹ für H oder CH₃ und die Reste R², R³ und M, wie auch vorzugsweise R⁶ und R⁸ für H.

Die Struktureinheit **A** der Formel (I) stellt somit vorzugsweise eine Methacrylsäureeinheit oder eine Acrylsäureeinheit oder Analoga davon dar. Besonders gute Resultate wurden erzielt, wenn die Struktureinheit **A** der Formel (I) eine Methacrylsäureeinheit darstellt.

Vorzugsweise ist beim Polymer **P** für R¹⁵ die Reihenfolge von (R¹¹O), (R¹²O) und (R¹³O) zufällig, alternierend oder blockweise und (R¹¹O) ≠ (R¹²O) ≠ (R¹³O). Vorzugsweise steht R¹¹ unabhängig voneinander für eine C₂-Alkylengruppe, R¹² unabhängig voneinander für eine C₃-Alkylengruppe und R¹³ unabhängig voneinander für eine C₄-Alkylengruppe.
Bei einem bevorzugten Polymer **P** sind mindestens 30 Mol-%, besonders bevorzugt 50 - 100 Mol-%, noch mehr bevorzugt 80 - 100 Mol-%, am meisten bevorzugt 100 Mol-% der Struktureinheit **B** der Formel (II) durch eine Struktur dargestellt bei der R¹¹ eine C₂-Alkylengruppe darstellt und y = 0 und z = 0. Das heisst, R¹⁵ umfasst vorzugsweise mindestens 30 Mol-% (R¹¹O)-Einheiten, vorzugsweise 50 bis 100 Mol-% (R¹¹O)-Einheiten, noch mehr bevorzugt 80 bis 100 Mol-% (R¹¹O)-Einheiten, bezogen auf die Gesamtmolmenge aller (R¹¹O)-, (R¹²O)- und (R¹³O)-Einheiten. Insbesondere bevorzugt umfasst R¹⁵ 100 Mol-% (R¹¹O)-Einheiten, bezogen auf die Gesamtmolmenge aller (R¹¹O)-, (R¹²O)- und (R¹³O)-Einheiten. R¹⁴ kann je nach Herstellverfahren des Polymers **P** für H, einen C₁ - C₁₂ Alkyl- oder Cycloalkylrest, einen C₇ - C₂₀ Alkylaryl- oder Aralkylrest, oder einen substituierten oder unsubstituierten Arylrest stehen. Wird das Polymer **P** über die polymeranaloge Reaktion hergestellt, ist R¹⁴ vorzugsweise R^{14"}, insbesondere ein Methylrest, und steht nicht für ein Wasserstoffatom.

Die Struktureinheit **C** enthält eine oder zwei Tetrahydrofurfuryl-Verbindungen. R⁷ steht für einen Rest der Formel (V), wobei R¹⁶ bevorzugt für O oder NH steht. Ebenfalls besonders gut geeignet ist eine Verbindung, bei der R¹⁶ für OR¹⁸ steht und R¹⁸ für -(CH₂CH₂O)₂- steht. R⁸ kann ebenfalls für einen Rest der Formel (V) stehen. Vorzugsweise steht R⁸ für H.

Die Reste R^{11'}, R^{12'} und R^{13'} beziehungsweise (R^{11'}O), (R^{12'}O) und (R^{13'}O) stehen unabhängig voneinander für Substituenten, wie sie für R¹¹, R¹² und R¹³ beziehungsweise für (R¹¹O), (R¹²O) und (R¹³O) definiert sind.
Bei einem bevorzugten Polymer **P** wird die Struktureinheit **D** der Formel (IV) durch eine Struktur dargestellt bei der R⁹ H bedeutet und R¹⁰ eine Verbindung der Formel (VIII) bedeutet, wobei z = 0, R^{11'} eine C₂-Alkylengruppe darstellt und R^{12'} eine C₃-Alkylengruppe darstellt. Das heisst, R¹⁰ umfasst vorzugsweise mindestens 30 Mol-% (R^{11'}O)-Einheiten, vorzugsweise 50 bis 80 Mol-% (R^{11'}O)-Einheiten, noch mehr bevorzugt 60 bis 80 Mol-% (R^{11'}O)-Einheiten, und mindestens 5 Mol-% (R^{12'}O)-Einheiten, vorzugsweise 10 bis 50 Mol-% (R^{12'}O)-Einheiten, noch mehr bevorzugt 20 bis 40 Mol-% (R^{12'}O)-Einheiten, bezogen auf die Gesamtmolmenge aller (R^{11'}O)- und (R^{12'}O)-Einheiten. Insbesondere bevorzugt umfasst R¹⁰ mindestens 70 Mol-% (R^{11'}O)-Einheiten und höchstens 30 Mol-% (R^{12'}O)-Einheiten, bezogen auf die Gesamtmolmenge aller (R^{11'}O)-, (R^{12'}O)- und (R^{13'}O)-Einheiten.

Die weitere Struktureinheit **E** kann eine weitere Amid- oder Estereinheit sein. Beispielsweise kann die Struktureinheit **E** eine Estereinheit sein, welche durch Umsetzung einer Mono- oder Dicarbonsäure mit einem Alkylalkohol, insbesondere einem C₆-C₂₀ Alkylalkohol hergestellt wird.

Ein besonders bevorzugtes Polymer **P** umfasst oder besteht aus
a) mindestens einer Struktureinheit **A** der Formel (I'); 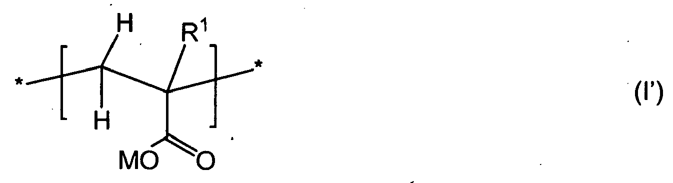
b) mindestens einer Struktureinheit **B** der Formel (II'); 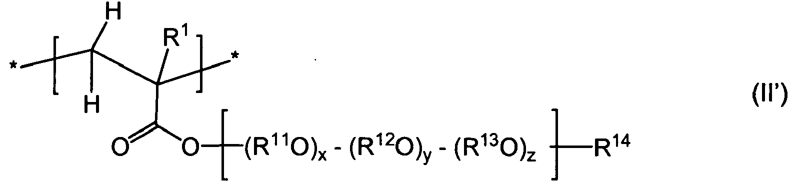 und
c) mindestens einer Struktureinheit **C** der Formel (III'), 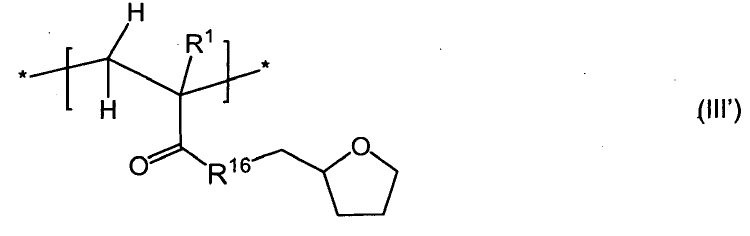
wobei R¹ für H oder einen Alkylrest, vorzugsweise einen Methylrest, steht,
wobei M ein H⁺, Na⁺, Ca⁺⁺/2, Mg⁺⁺/2, NH₄⁺ oder ein organisches Ammonium, vorzugsweise ein H⁺ darstellt,
wobei R¹¹ für eine Ethylengruppe stehen,
wobei R¹² für eine Propylengruppe stehen,
wobei R¹³ für eine Butylengruppe stehen,
wobei R¹⁴ für eine C₁ bis C₁₂ Alkylgruppe, vorzugsweise eine Methylgruppe steht,
wobei R¹⁶ für O oder NH steht, vorzugsweise für O, und
wobei x für 1 - 250, vorzugsweise 10 bis 100 steht, wobei y für 0 - 250, vorzugsweise für 0 bis 50 steht, wobei z für 0 bis 100, vorzugsweise für 0 steht.

Das Polymer **P** kann eine Kombination von verschiedenen Struktureinheiten der jeweiligen Struktureinheiten von **A, B, C**, und gegebenenfalls **D** und **E** aufweisen. Beispielsweise können mehrere Struktureinheiten **A** gemischt im Polymer **P** vorkommen, so zum Beispiel ein Gemisch von Methacrylsäureeinheiten mit Acrylsäureeinheiten. Oder es können mehrere Estereinheiten **B** gemischt im Polymer **P** vorkommen, so zum Beispiel mehrere Estereinheiten **B** mit verschiedenen Substituenten R¹⁵. Bevorzugt ist beispielsweise die gemeinsame Verwendung von Polyalkylenglykolen, insbesondere von Polyethylenglykolen mit Polypropylenglykolen, oder die gemeinsame Verwendung von Polyalkylenglykolen, insbesondere von Polyethylenglykolen, mit unterschiedlichem Molekulargewicht. Es können auch mehrere Amideinheiten **D** im Polymer **P** vorliegen, insbesondere die Kombination von mindestens einer Einheit **D** mit R^{9'} und R^{10'} als Reste R⁹ und R¹⁰ mit mindestens einer Einheit **D** mit R^{9"} und R^{10"} als Reste R⁹ und R¹⁰.

In einer bevorzugten Ausführungsform umfasst das Polymer **P** 5 bis 95 Mol-%, vorzugsweise 20 bis 80 Mol-% der Struktureinheit **A** der Formel (I), 1 bis 90 Mol-%, vorzugsweise 15 bis 70 Mol-% der Struktureinheit **B** der Formel (II), 0.001 bis 10 Mol-%, vorzugsweise 0.01 bis 6 Mol-%, insbesondere bevorzugt 0.1 bis 5 Mol-%, der Struktureinheit **C** der Formel (III), gegebenenfalls 0 bis 30 Mol-%, vorzugsweise 0 bis 1 Mol-% der Struktureinheit **D** der Formel (IV), und gegebenenfalls 0 bis 30 Mol-%, vorzugsweise 0 bis 1 Mol-% der Struktureinheit **E**, jeweils bezogen auf die Gesamtmolmenge der Struktureinheiten von **A, B, C, D** und **E** im Polymer **P**.

Die Abfolge der einzelnen Struktureinheiten **A, B, C, D** und **E** im Polymer P kann alternierend, statistisch, blockweise oder zufällig sein.

Das Polymer **P** weist vorzugsweise ein Molekulargewicht M_{w} im Bereich von 1'000 - 150'000 g/mol, vorzugsweise 1'000 - 80'000 g/mol, besonders bevorzugt 10'000-50'000 g/mol, auf und ist vorzugsweise aufgebaut aus 10 bis 500, bevorzugt 20 bis 200, insbesondere 25 bis 60, Struktureinheiten.

Das Polymer **P** kann auf verschiedene Arten hergestellt werden. Es sind im Wesentlichen drei Verfahren im Einsatz. In einem ersten Verfahren werden die Polymere in einer sogenannten polymeranalogen Umsetzung aus einem Polycarboxylpolymer und den jeweiligen Alkoholen und gegebenenfalls Aminen hergestellt. Bei einem zweiten Verfahren werden im ersten Schritt bei der polymeranalogen Umsetzung neben Ester- und eventuell Amidgruppen auch Anhydridgruppen gebildet, und in einem zweiten Schritt werden die im ersten Schritt gebildeten Anhydridgruppen mit einer Aminverbindung zu einem Amid umgesetzt. In einem dritten Verfahren werden die Polymere aus den jeweiligen ungesättigten Carbonsäure-, Ester- und Amid-funktionenellen Monomeren durch radikalische Polymerisation hergestellt.

Besonders bevorzugte Polymere werden nach der polymeranalogen Reaktion gemäss dem ersten Verfahren hergestellt. Die polymeranaloge Umsetzung weist den grossen Vorteil auf, dass aus kommerziell erhältlichen Polymeren aus α-,β-ungesättigten Mono- oder Dicarbonsäuren, speziell aus Poly(meth)acrylsäuren, durch Variation der Menge, der Art und dem Verhältnis von Alkohol und gegebenefalls Amin, in einfacher und sicherer Weise sehr unterschiedliche Kammpolymere mit sehr unterschiedlichen Eigenschaften erhalten werden können. Solche polymeranaloge Umsetzungen sind beispielsweise in WO97/35814A1, WO95/09821A2, DE 100 15 135A1, EP 1138697A1, sowie EP1348729A1 beschrieben. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen. Polymer **P** kann auch in festem Aggregatszustand erhalten werden, wie in EP 1 348 729 A1 auf Seite 3 bis Seite 5 sowie in dessen Beispielen beschrieben.

Es wird also bevorzugt ein Polymer **P** verwendet, wobei das Polymer **P** erhältlich ist durch die Reaktion von
(a) mindestens einer Polycarbonsäure oder Analogon einer Polycarbonsäure; und
(b) mindestens einer Monohydroxyverbindung **F** der Formel (IX)

   HO-[R¹¹O)ₓ-(R¹²O)_{y}-(R¹³O)_{z}]-R^{14"} (IX)

   und
(c) mindestens einer Tetrahydrofurfuryl (THF) -Verbindung **G** der Formel (X) 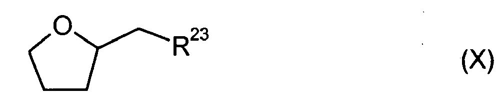 und gegebenenfalls
(d) mindestens einer Aminverbindung **H** der Formel (XI)

   R^{9'}-NH-R^{10'} (XI)

   und gegebenenfalls
(e) mindestens einer weiteren Verbindung **J**.

Die einzelnen Verbindungen werden bei der Herstellung vorzugsweise in einer Menge eingesetzt, so dass bezogen auf 1 Mol Einheiten mindestens einer Polycarbonsäure oder einem Analogon einer Polycarbonsäure 1 bis 90 Mol-%, vorzugsweise 15 bis 70 Mol-% mindestens einer Monohydroxyverbindung **F** der Formel (IX), 0.001 bis 10 Mol-%, vorzugsweise 0.01 bis 6 Mol-%, insbesondere bevorzugt 0.1 bis 5 Mol-%, mindestens einer THF-Verbindung **G** der Formel (X), gegebenenfalls 0 bis 30 Mol-%, vorzugsweise 0 bis 1 Mol-% mindestens einer Aminverbindung **H** der Formel (XI), und gegebenenfalls 0 bis 30 Mol-%, vorzugsweise 0 bis 1 Mol-% mindestens einer weiteren Verbindung **J**, eingesetzt werden, jeweils bezogen auf 1 Mol Polycarbonsäureeinheiten.

Unter Polycarbonsäure oder Analogon einer Polycarbonsäure versteht man ein Homo- oder Copolymer, welches durch Polymerisation von mindestens einem Monomer **a** und gegebenenfalls mindestens einem Monomer **b** erhalten werden kann. Monomer **a** ist ausgewählt aus der Gruppe umfassend ungesättigte Monocarbonsäuren, ungesättigte Dicarbonsäuren, Analoga derselben und Mischungen derselben. Ungesättigte Mono- oder Dicarbonsäuren umfassen vorzugsweise Maleinsäure, Itaconsäure, Fumarsäure, Citraconsäure, Glutaconsäure, Mesaconsäure oder Crotonsäure, insbesondere Acrylsäure oder Methacrylsäure. Unter Analogon einer Mono- oder Dicarbonsäure oder Polycarbonsäure versteht man im Sinne der vorliegenden Erfindung Säuresalze, Säurehalogenide, Säureanhydride und Säureester, im besonderen Alkyl-Säureester.
Monomer **b** ist vorzugsweise ausgewählt aus der Gruppe von ethylenisch ungesättigten Monomeren umfassend α- β-ungesättigte Mono- oder Dicarbonsäuren, α- β-ungesättigte Mono- oder Dicarbonsäureester, Styrol, Ethylen, Propylen, Vinylacetat insbesondere Methacrylsäure, Acrylsäure, Crotonsäure, Itaconsäure, Maleinsäure, Fumarsäure, sowie deren Salze, Ester und Mischungen davon.
Bevorzugt als Copolymer ist ein Copolymer aus Acrylsäure und Methacrylsäure sowie deren Salze oder Teilsalze. Bevorzugt als Homopolymer ist Polymethacrylsäure oder Polyacrylsäure, insbesondere Polymethacrylsäure, deren Salze oder Teilsalze.

Die Polycarbonsäure oder das Analogon der Polycarbonsäure kann hierbei als freie Säure oder als Teilsalz vorliegen, wobei der Term "Salz" hier und im Folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst. Bei der Herstellung der Polycarbonsäure oder des Analogons der Polycarbonsäure sind allenfalls verwendete Initiatoren, CoInitiatoren und Polymerisationsregler gegebenenfalls so zu wählen, dass in Polymer **P** vorzugsweise keine reaktionsfähigen Hydroxyl- oder Aminfunktionen vorhanden sind.

Unter "Monohydroxy-Verbindung" wird hier und im folgenden eine Substanz verstanden, die nur eine freie Hydroxylgruppe aufweist.
Unter "Monoamin-Verbindung" wird hier und im folgenden eine Substanz, die nur eine freie Aminogruppe aufweist, oder Ammoniak als Gas oder als wässrige Lösung, verstanden.
Unter 'Molekulargewicht' oder 'Molgewicht' versteht man im Sinne der Erfindung das Molekulargewichtsmittel M_{w}.
Unter "(Meth)acrylsäure" wird im gesamten vorliegenden Dokument sowohl Acrylsäure als auch Methacrylsäure verstanden.

Das Homo- oder Copolymer der Polycarbonsäure oder des Analogons der Polycarbonsäure wird durch eine radikalische Polymerisation nach üblichen Verfahren erhalten. Sie kann in Lösungsmittel, bevorzugt in Wasser oder in Substanz, erfolgen. Diese radikalische Polymerisation erfolgt bevorzugt in Gegenwart von mindestens einem Molekulargewichtsregler, insbesondere einer anorganischen oder organischen Schwefelverbindung, wie beispielsweise Mercaptanen, oder einer Phosphorverbindung. Die Polymerisation erfolgt vorteilhaft unter derartigen Bedingungen, dass das gebildeten Homo- oder Copolymere aus 10 bis 500, bevorzugt 20 bis 200, mehr bevorzugt 25 bis 60, Monomerbausteinen aufgebaut ist. Solche Homo- oder Copolymere von (Meth)acrylsäure sind kommerziell erhältlich. Das Homo- oder Copolymer der Polycarbonsäure oder des Anologons der Polycarbonsäure weist vorzugsweise ein Molekulargewicht M_{w} von 500 bis 20'000 g/mol, bevorzugt von 1'000 bis 15'000 g/mol, insbesondere bevorzugt von 1'500 bis 8'000 g/mol, auf.

Die Monohydroxy-Verbindung **F** ist vorzugsweise mit unter üblichen Reaktionsbedingungen nicht reaktiven Endgruppen einseitig abgeschlossen. Bevorzugt handelt es sich hierbei um ein Polymer mit einem Polyalkylenglykol-Grundgerüst. Die Monohydroxy-Verbindung F weist die Formel (IX) auf

HO-[(R¹¹O)ₓ-(R¹²O)_{y}-(R¹³O)_{z}]-R^{14"} (IX)

wobei R¹¹, R¹² und R¹³ je unabhängig voneinander eine C₂ - C₄ Alkylengruppe bedeutet mit einer Reihenfolge der (R¹¹O)-, (R¹²O)-, und (R¹³O)-Einheiten in irgendeiner möglichen Sequenz; wobei R^{14"} für einen C₁ - C₁₂ Alkyl- oder Cycloalkylrest, einen C₇ - C₂₀ Alkylaryl- oder Aralkylrest, oder einen substituierten oder unsubstituierten Arylrest steht; und wobei x, y, z unabhängig voneinander je die Werte 0 - 250 aufweisen und x+y+z = 3 - 250 ist.
Bevorzugt sind Monohydroxy-Verbindungen **F** der Formel (IX) mit einer Methyl-, Ethyl-, i-Propyl- oder n-Butylgruppe, insbesondere mit einer Methylgruppe, als Substituent R^{14"} sowie mit z=0. Vorzugsweise steht R¹¹ unabhängig voneinander für eine C₂-Alkylengruppe und R¹² unabhängig voneinander für eine C₃-Alkylengruppe. Bevorzugt handelt es sich bei **F** um Mischpolymerisate aus Ethylenoxid/Propylenoxid, mehr bevorzugt um einseitig endgruppenverschlossenes Polyethylenglykol.
Mischungen mehrerer unterschiedlicher Verbindungen der Gruppe F sind ebenfalls möglich. So können beispielsweise einseitig endgruppenverschlossene Polyethylenglykole mit unterschiedlichen Molekulargewichten gemischt werden, oder es können beispielsweise Mischungen von einseitig endgruppenverschlossenen Polyethylenglykolen mit einseitig endgruppenverschlossenen Mischpolymeren aus Ethylenoxid und Propylenoxid oder einseitig endgruppenverschlossenen Polypropylenglykolen verwendet werden. Vorzugsweise wird das Polyalkylenglykol mit einer Methylgruppe einseitig endgruppenverschlossen. Besonders bevorzugt als Hydroxyverbindung **F** ist Polyethylenglykol-Monomethylether.

Unter ,mit unter üblichen Reaktionsbedingungen nicht reaktiven Endgruppen abgeschlossen' versteht man im Sinne der Erfindung, dass anstelle von für die Veresterung oder Amidierung reaktiven funktionellen Gruppen solche Gruppen vorhanden sind, welche nicht mehr zur Reaktion befähigt sind. Die üblichen Reaktionsbedingungen sind diejenigen, welche der Fachmann für Veresterungen und Amidierungen kennt. Bei ,einseitig abgeschlossen' Verbindungen ist nur eine Seite nicht mehr zur Reaktion fähig.

Das Molekulargewicht der mindestens einen Hydroxyverbindung **F** der Formel (IX) ist etwa 120-20'000 g/mol, insbesondere etwa 250-10'000 g/mol. In einer bevorzugten Ausführungsform ist die Monohydroxy-Verbindung **F** ein einseitig endgruppenverschlossenes Polyalkylenglykol, insbesondere Polyethylenglykol oder Polypropylenglykol, mit einem Molekulargewicht M_{w} von 300 bis 10'000 g/mol, insbesondere von 500 bis 5000 g/mol, bevorzugt von 800 bis 3000 g/mol. Insbesondere geeignet ist auch eine Mischung von einseitig endgruppenverschlossenen Polyalkylenglykolen mit unterschiedlichem Molekulargewicht, beispielsweise die Mischung von Polyalkylenglykolen mit einem Molekulargewicht von 1'000 g/mol mit Polyalkylenglykolen mit einem Molekulargewicht von 3'000 g/mol.

Die Tetrahydrofurfuryl (THF)-Verbindung **G** weist die Formel (X) auf.

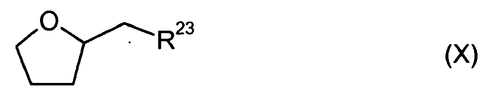

Dabei steht R²³ unabhängig voneinander für -NH₂, -(R¹⁷)_{q}-NH₂, -OH, oder -(R¹⁸)ₛ-OH, und R¹⁷ und R¹⁸ stehen je unabhängig voneinander für eine C₁ - C₁₂ Alkylengruppe, oder eine oder mehrere C₂ - C₄ Oxyalkylengruppen mit einer Reihenfolge in irgendeiner möglichen Sequenz. Der Index q ist, unabhängig voneinander, eine ganze Zahl und weist den Wert 1 auf, falls R¹⁷ eine C₁ - C₁₂ Alkylengruppe ist, und weist je den Wert 1 - 150 auf, falls R¹⁷ eine oder mehrere C₂ - C₄ Oxyalkylengruppen ist. Der Index s ist, unabhängig voneinander, eine ganze Zahl und weist den Wert 1 auf, falls R¹⁸ eine C₁ - C₁₂ Alkylengruppe ist, und weist je den Wert 1 - 150 auf, falls R¹⁸ eine oder mehrere C₂ - C₄ Oxyalkylengruppen ist. Vorzugsweise steht R²³ für -NH₂ oder -OH, besonders bevorzugt für -OH.
Beispiele für solche THF-Verbindungen **G** sind Tetrahydrofurfurylalkohol, Tetrahydrofurfuryl-amin oder Tetrahydrofurfuryl-(poly)alkylenglykol. Solche Verbindungen sind kommerziell erhältlich, beispielsweise bei Fluka, Schweiz. Verschiedene alkoxylierte THF-Verbindungen können bei auf Alkoxylierung spezialisierte Firmen bezogen werden.
Gute Resultate wurden erzielt, wenn als THF-Verbindung **G** THF-OH oder THF-NH₂ verwendet wurde. Ganz besonders bevorzugt ist THF-OH.

Zusätzlich zur Monohydroxy-Verbindung **F** und zur Tetrahydrofurfuryl-Verbindung **G** wird gegebenenfalls im ersten und gegebenenfalls im zweiten Verfahren eine Aminverbindung **H** eingesetzt. Dadurch erfolgt neben der Bildung von Estergruppen die Bildung von Amidgruppen. Erfolgt die Herstellung des Polymers **P** nach dem ersten Verfahren durch die sogenannte polymeranaloge Umsetzung, weist die Aminverbindung **H** vorzugsweise einen Siedepunkt und Flammpunkt auf, der höher liegt als die Reaktionstemperatur der Polycarbonsäure mit der Monohydroxy-Verbindung **F**. Weiterhin enthält die Aminverbindung **H** vorzugsweise keine Hydroxylgruppen.

Typische Beispiele solcher Aminverbindungen **H** lassen sich durch die Formel (XI) darstellen

R^{9'}-NH-R^{10'} (XI)

Einerseits können R^{9'} und R^{10'} zusammen einen Ring bilden, der gegebenenfalls Sauerstoff-, Schwefel- oder weitere Stickstoffatome enthält.
Beispiele für solche Aminverbindungen **H** sind insbesondere 9H-Carbazol, Indolin oder Imidazol.

Andererseits können R^{9'} und R^{10'} unabhängig voneinander H, eine C₈-C₂₀ Alkylgruppe, eine C₅ - C₉ Cycloalkyl-Gruppe, eine C₇ - C₁₂ Aralkyl-Gruppe, oder eine Verbindung der Formel (VI), (VII) oder (VIII) darstellen.

-R¹⁹-X(R²⁰)ᵣ (VI)

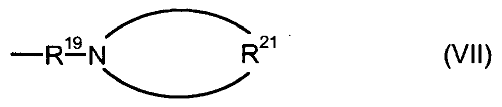

-[(R^{11'}O)ₓ,-(R^{12'}O)_{y},-(R^{13'}O)_{z},]- R^{14'} (VIII)

R¹⁹ stellt hierbei unabhängig voneinander eine Alkylengruppe, vorzugsweise eine C₁- bis C₄-Alkylengruppe, und R²⁰ unabhängig voneinander eine C₁- bis C₄-Alkylgruppe dar. X ist unabhängig voneinander ein S, O oder N dar, wobei r = 1, falls X= S oder O, und r = 2, falls X = N. R²¹ stellt eine Alkylengruppe mit gegebenenfalls Heteroatomen dar, und bildet mit dem Stickstoffatom einen 5-er- bis 8-er-Ring, insbesondere einen 6-er-Ring.
Die Substituenten R^{11'}, R^{12'}, R^{13'} und R^{14'} beziehungsweise die Indizes x', y' und z' weisen unabhängig voneinander dieselben Bedeutungen auf wie sie bereits vorgängig definiert wurden.
Beispiele für solche Aminverbindungen **H** sind Dioctylamin, Distearylamin, Ditalgfettamin, Fettamine wie Stearylamin, Cocosfettamin, Octadecylamin, Talgfettamin, Oleylamin; 3-Butoxy-propylamin, Bis(2-methoxyethyl)-amin; α-Methoxy-ω-Amino-Polyoxyethylen, α-Methoxy-ω-Amino-Polyoxypropylen, α-Methoxy-ω-Amino-Oxyethylene-Oxypropylen-Copolymer.
Vorzugsweise ist die Aminverbindung **H** ein primäres Monoamin. Besonderes bevorzugt als Monoaminverbindungen **H** sind α-Methoxy-ω-Amino-Oxyethylen-Oxypropylen-Copolymere, wie beispielsweise Jeffamin® M-2070, oder α-Methoxy-ω-Amino-Polyoxyethylene, sowie andere Monoamine, welche beispielsweise von der Firma Huntsman unter dem Namen Jeffamine® der M-Serie vertrieben werden, sowie Mischungen davon. Meist bevorzugt sind α-Methoxy-ω-Amino-Oxyethylen-Oxypropylen-Copolymere. Solche Monoaminverbindungen **H** sind beispielsweise erhältlich aus einer mit Alkohol gestarteten Polymerisation von Ethylen- und/oder Propylenoxid gefolgt von Umwandlung der terminalen Alkoholgruppe in eine Amingruppe.

Als weitere Verbindung **J** ist eine Verbindung bevorzugt, welche mit der Polycarbonsäure oder dem Analogon der Polycarbonsäure eine Reaktion eingehen kann. Beispiele für eine Verbindung **J** sind weitere Amine oder Alkohole, beispielsweise ein C₆-C₂₀ Alkylalkohol oder ein weiteres Mono- oder Diamin. Es können auch mehrere verschiedene Verbindungen **J** eingesetzt werden.

Die Umsetzung der Polycarbonsäure oder dem Analogon der Polycarbonsäure mit mindestens einer Monohydroxyverbindung **F** der Formel (IX) und mindestens einer Tetrahydrofurfuryl-Verbindung **G** der Formel (X) und gegebenenfalls mindestens einer Aminverbindung **H** der Formel (XI) und gegebenenfalls mindestens einer weiteren Verbindung **J** zu einem Polymer **P** erfolgt bei der polymeranalogen Reaktion typischerweise derart, dass zur Polycarbonsäure oder dem Analogon der Polycarbonsäure unter Rühren die mindestens eine Monohydroxy-Verbindung **F** zugegeben wird und auf die Umsetzungstemperatur aufgeheizt wird. Die Mischung wird bei der oben beschriebenen Umsetzungstemperatur weitergerührt, die mindestens eine Tetrahydrofurfuryl-Verbindung **G** der Formel (X) zugegeben und, eventuell unter Vakuum oder durch Über- oder Durchleiten eines Gasstromes über beziehungsweise durch die Reaktionsmasse, umgesetzt. Die Temperatur für diese Umsetzung ist beispielsweise zwischen 140°C und 200°C. Die Reaktion ist aber auch bei Temperaturen zwischen 150°C und 175°C möglich. Falls eine Aminverbindung **H** eingesetzt wird, kann deren Zugabe gleichzeitig mit der Monohydroxy-Verbindung **E** oder aber zu einem späteren Zeitpunkt während dieses Reaktionsschrittes erfolgen.
In einer bevorzugten Ausführungsform wird diese Umsetzung in Gegenwart eines Veresterungskatalysators, insbesondere einer Säure durchgeführt. Bevorzugt handelt es sich bei einer solchen Säure um Schwefelsäure, p-Toluolsulfonsäure, Benzolsulfonsäure, Methansulfonsäure, Phosphorsäure oder phosphorige Säure. Bevorzugt ist Schwefelsäure. Die Entfernung des Wassers aus der Reaktionsmischung kann unter Atmosphärendruck aber auch unter Vakuum erfolgen. Auch kann ein Gasstrom über oder durch die Reaktionsmischung geführt werden. Als Gasstrom kann Luft oder Stickstoff verwendet werden.
Die Umsetzung kann mittels Messung der Säurezahl, beispielsweise durch Titration, verfolgt werden und bei einer gewünschten Säurezahl, so dass das gewünschte Verhältnis von Carbonsäure zu Ester- bzw. Amidgruppen erreicht wird, abgebrochen werden. Die Reaktion wird durch Aufheben des Vakuums und Abkühlen abgebrochen.

In einer bevorzugten Ausführungsform wird eine Polymethacrylsäure mit einem Polyethylenglykol welches einseitig mit einer Methoxygruppe abgeschlossen ist, verestert und mit einer Tetrahydrofurfuryl-Verbindung, insbesondere einem THF-Alkohol oder THF-Amin, umgesetzt.

Bei einem zweiten Verfahren werden in einem ersten Schritt gemäss der sogenannten polymeranalogen Reaktion neben Estergruppen und gegebenenfalls Amidgruppen auch Anhydridgruppen gebildet und in einem zweiten Schritt werden die im ersten Schritt gebildeten Anhydridgruppen vollständig oder teilweise mit einer Aminverbindung zu einem Amid umgesetzt. Solche Verfahren werden beispielsweise in WO2005/090416A1 beschrieben.
Der erste Schritt erfolgt vorzugsweise wie bei dem für die polymeranaloge Umsetzung beschriebenen Herstellungsverfahren.

Falls im ersten Schritt des zweiten Verfahrens bereits Aminverbindungen eingesetzt werden, sind insbesondere Aminverbindungen, wie sie für die Aminverbindung **H** beschrieben wurden, bevorzugt.

Die Aminverbindung **H** weist in diesem Fall einen Siedepunkt und Flammpunkt auf, der höher liegt als die Reaktionstemperatur des ersten Schrittes. Weiterhin darf die Aminverbindung **H** keine Hydroxylgruppen enthalten.
Bevorzugt werden im ersten Schritt keine Amine verwendet.

In einem zweiten Schritt des zweiten Verfahrens wird das im ersten Schritt gebildete Polymer, welches Anhydridgruppen neben Estergruppen und gegebenenfalls Amidgruppen aufweist, mit einer Aminverbindung **H'** bei Temperaturen deutlich unter 100°, bevorzugt unter 60 °C, vorzugsweise unter 40°C zum Amid umgesetzt. Bevorzugt erfolgt die Umsetzung zwischen 10°C und 60°C, besonders bevorzugt zwischen 15 und 40°C, noch mehr bevorzugt zwischen 20 und 30°C. Diese Umsetzung ist unter schonenden Bedingungen realisierbar und bedarf keines Vakuums, so dass auch Aminverbindungen **H'** mit einem tiefen Siedepunkt oder aber Aminverbindungen **H'**, welche zusätzlich zur Aminogruppe auch noch Hydroxylgruppen enthalten, eingesetzt werden können.

Erfolgt die Herstellung des Polymers **P** nach diesem zweiten Verfahren, lassen sich typische Beispiele geeigneter Aminverbindungen **H'** für den zweiten Schritt durch die Formel (XI') darstellen.

R^{9''}-NH-R^{10''} (XI')

Einerseits können R^{9"} und R^{10"} zusammen einen Ring bilden, der gegebenenfalls Sauerstoff-, Schwefel- oder weitere Stickstoffatome enthält. Beispiele für solche Aminverbindungen **H'** sind insbesondere 9H-Carbazol, Indolin, Piperidin, Morpholin, Pyrrolidin, 1,3-Thiazolidin, 2,3 -Dihydro-1,3-thiazol, Imidazol. Besonders geeignet ist Morpholin.
Andererseits können R^{9"} und R^{10"} unabhängig voneinander H, eine C₁ - C₁₂ Alkylgruppe, eine C₅ - C₉ Cycloalkyl-Gruppe, eine C₇ - C₁₂ Aralkyl-Gruppe, eine Hydroxyalkylgruppe, insbesondere -CH₂CH₂-OH oder -CH₂CH(OH)CH₃, oder eine Verbindung der Formel (VI), (VII) oder (VIII) darstellen.

-R¹⁹-X(R²⁰)ᵣ (VI)

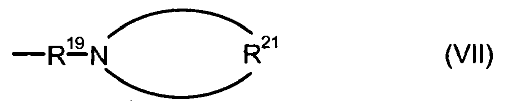

-[(R^{11'}O)_{x'}-(R^{12'}O)_{y'}-(R^{13'}O)_{z'}]R^{14'} (VIII)

R¹⁹ stellt hierbei unabhängig voneinander eine Alkylengruppe, vorzugsweise eine C₁- bis C₄-Alkylengruppe, und R²⁰ unabhängig voneinander eine C₁- bis C₄-Alkylgruppe dar. X ist unabhängig voneinander ein S, O oder N,
wobei r = 1, falls X= S oder O, oder r = 2, falls X = N. R²¹ stellt eine Alkylengruppe mit gegebenenfalls Heteroatomen dar, und bildet mit dem Stickstoffatom einen 5-er- bis 8-er-Ring, insbesondere einen 6-er-Ring.
Die Substituenten R^{11'}, R^{12'}, und R^{14'} beziehungsweise die Indizes x', y' und z' weisen unabhängig voneinander dieselben Bedeutungen auf wie sie bereits vorgängig definiert wurden.

Als Hydroxyalkylgruppe bevorzugt ist die Gruppe -CH₂CH₂-OH oder -CH₂CH(OH)CH₃.
Geeignete Aminverbindungen **H'** sind beispielsweise Ammoniak, Butylamin, Hexylamin, Octylamin, Decylamin, Diethylamin, Dibutylamin, Dihexylamin, Cyclopentylamin, Cyclohexylamin, Cycloheptylamin und Cyclooctylamin, Dicyclohexylamin, 2-Phenyl-ethylamin, Benzylamin, Xylylamin; N,N-Dimethyl-ethylendiamin, N,N-Diethylethylendiamin, 3,3'-Iminobis(N,N-dimethyl-propylamin), N,N-Dimethyl-1,3-propandiamin, N,N-Diethyl-1,3-propandiamin, N,N,N'-Trimethyl-ethylendiamin, 2-Methoxy-ethylamin, 3-Methoxy-propylamin; Ethanolamin, Isopropanolamin, 2-Aminopropanol, Diethanolamin, Diisopropanolamin, N-isopropyl-ethanolamin, N-Ethyl-ethanolamin, N-Butyl-ethanolamin, N-Methyl-ethanolamin, 2-(2-aminoethoxy)ethanol; 1-(2-Aminoethyl)-piperazin, 2-Morpholino-ethylamin, 3-Morpholino-propylamin.
Besonders bevorzugt ist die Aminverbindung **H'** ausgewählt aus der Gruppe umfassend Morpholin, 2-Morpholin-4-yl-ethylamin, 2-Morpholin-4-yl-propylamin, N,N-Dimethylaminopropylamin, Ethanolamin, Diethanolamin, 2-(2-aminoethoxy)ethanol, Dicyclohexylamin, Benzylamin, 2-Phenyl-ethylamin, N-(2-Hydroxyethyl)ethylendiamin, sowie andere Amine, welche beispielsweise von der Firma Huntsman unter dem Namen Jefifamine® der M-Serie vertrieben werden, sowie Mischungen davon.

In einem dritten Herstellverfahren wird das Polymer **P** über die radikalische Polymerisation hergestellt. Der Weg über die radikalische Polymerisation ist die gängigste Methode, sie ist allerdings bei speziellen Verbindungen erschwert durch die kommerzielle Verfügbarkeit der entsprechenden Monomere und bedarf einer aufwändigen Prozesskontrolle.

Die Erfindung betrifft daher zusätzlich eine Polymers **P**, welches erhältlich ist durch die Polymerisationsreaktion in Gegenwart von mindestens einem Radikalbildner von
(a) mindestens einer ethylenisch ungesättigten Mono- oder Dicarbonsäure **M** oder einem Analogon von einer ungesättigten Mono- oder Dicarbonsäure; mit
(b) mindestens einem ethylenisch ungesättigten Carbonsäurederivat **K** der Formel (XIII); 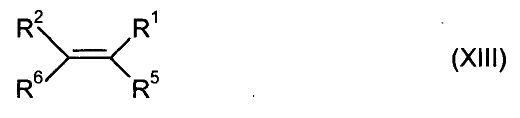 und
(c) mindestens einem zweiten ethylenisch ungesättigten Carbonsäurederivat L der Formel (XIV); 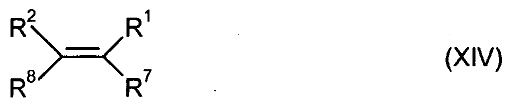 und gegebenenfalls
(d) mindestens einem dritten ethylenisch ungesättigten Carbonsäurederivat **N** der Formel (XV); 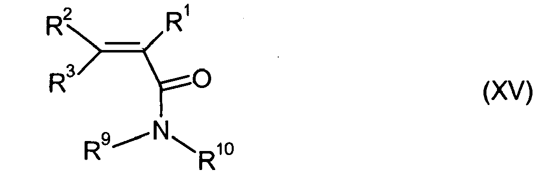 und gegebenenfalls
(e) mindestens einer weiteren ethylenisch ungesättigten Verbindung **Q**.

Bei der Herstellung über die radikalische Polymerisation werden die einzelnen Monomere vorzugsweise in einer Menge von 5 bis 95 Mol-%, vorzugsweise 20 bis 80 Mol-% mindestens einer Mono- oder Dicarbonsäure **M**, 1 bis 90 Mol-%, vorzugsweise 15 bis 70 Mol-% mindestens eines ethylenisch ungesättigten Carbonsäurederivats **K** der Formel (XIII), 0.001 bis 10 Mol-%, vorzugsweise 0.01 bis 6 Mol-%, insbesondere bevorzugt 0.1 bis 5 Mol-%, mindestens eines zweiten ethylenisch ungesättigten Carbonsäurederivats **L** der Formel (XIV), gegebenenfalls 0 bis 30 Mol-%, vorzugsweise 0 bis 1 Mol-% mindestens eines dritten ethylenisch ungesättigten Carbonsäurederivats **N** der Formel (XV), und gegebenenfalls 0 bis 30 Mol-%, vorzugsweise 0 bis 1 Mol-% mindestens einer weiteren ethylenisch ungesättigten Verbindung **Q**, jeweils bezogen auf die Gesamtmolmenge der Monomere **M, K, L, N** und **Q**.

Die Substituenten R¹, R², R³, R⁵, R⁶, R⁷, R⁸, R⁹ und R¹⁰ weisen unabhängig voneinander je dieselben Bedeutungen auf, wie sie bereits für die Formel (II), (III) beziehungsweise (IV) beschrieben wurden.

Die ethylenisch ungesättigte Mono- oder Dicarbonsäure **M** oder das Analogon der ungesättigten Mono- oder Dicarbonsäure ist vorzugsweise Maleinsäure, Itaconsäure, Fumarsäure, Citraconsäure, Glutaconsäure, Mesaconsäure oder Crotonsäure, insbesondere Acrylsäure oder Methacrylsäure. Besonders bevorzugt ist die Methacrylsäure. Unter Analogon einer Mono- oder Dicarbonsäure versteht man im Sinne der vorliegenden Erfindung Säuresalze, Säurehalogenide, Säureanhydride und Säureester, im besonderen Alkyl-Säureester.

Das mindestens eine ethylenisch ungesättigte Carbonsäurederivat **K** der Formel (XIII) ist vorzugsweise ein Carbonsäureester, besonders bevorzugt ein Acrylsäureester oder ein Methacrylsäureester. Beispiele für solche Ester sind Polyalkylenglykol(meth)acrylate. Es können mehrere Monomere der Formel (XIII) mit verschiedenen Substituenten R⁵ in Kombination miteinander verwendet werden. Bevorzugt ist beispielsweise die gemeinsame Verwendung von Polyalkylenglykolen, insbesondere von Polyethylenglykolen, mit unterschiedlichem Molekulargewicht.

Das zweite ethylenisch ungesättigte Carbonsäurederivat **K** der Formel (XIV) ist ein Carbonsäurederivat, welches mindestens eine Tetrahydrofurfuryl-Verbindung enthält. Die Tetrahydrofurfuryl-Verbindung ist bevorzugt ein Tetrahydrofurfuryl-Ester oder ein Tetrahydrofurfuryl-Amid. Besonders geeignet sind Ester oder Amide, insbesondere Ester, der Acrylsäure oder Methacrylsäure. Insbesondere geeignet ist das Tetrahydrofurfurylmethacrylat.

Das dritte ethylenisch ungesättigte Carbonsäurederivat **N** der Formel (XV) ist ein Carbonsäureamid. Als geeignete Carbonsäureamide können Amide von ethylenisch ungesättigten Mono- oder Dicarbonsäuren mit Aminverbindungen **H'** der Formel (VIII'), insbesondere von Monoaminverbindungen **H** der Formel (VIII), eingesetzt werden. Besonders bevorzugt sind Amide der (Meth)acrylsäure, vorzugsweise die Polyoxyalkylenmonoamide. Besonders bevorzugte Amid-Monomere sind die Alkylpolyalkylenglycol(meth)acrylamide, besonders bevorzugt die Methylpolyethylenglycol(meth)acrylamide, die Methylpolyethylenglycolpolypropylenglycol(meth)acrylamide oder die Methylpolypropylenglycol(meth)-acrylamide. Beispiele für ungesättigte Carbonsäureamide von Aminen der Formel (VIII') sind vorzugsweise Mono- oder Di-hydroxyethyl(meth)acrylamid, Mono- oder Di-hydroxypropyl(meth)acrylamid, Mono- oder Di-cyclohexyl-(meth)acrylamid oder N-Alkyl,-N-hydroxyethyl(meth)acrylamide oder N-Alkyl,-N-hydroxypropyl(meth)acrylamide.

Es können ein oder mehrere dieser ungesättigten Carbonsäureamide verwendet werden.

Das Polymer **P** findet in unterschiedlichen Bereichen Anwendung, insbesondere in der Beton- und Zementtechnologie oder der Gipstechnologie. Das Polymer **P** verfügt über besonders gute Eigenschaft als Dispergiermittel, insbesondere als Verflüssiger, für hydraulisch abbindende Zusammensetzungen, das heisst, dass die resultierende Mischung ein bedeutend grösseres Fliessverhalten aufweist im Vergleich zu einer Zusammensetzung ohne das Dispergiermittel, ohne dass das Erstarren deutlich verzögert wird. Das Fliessverhalten wird typischerweise über das Ausbreitmass gemessen. Andererseits können Mischungen erzielt werden, die bei gleichem Fliessverhalten bedeutend weniger Wasser benötigen, so dass die mechanischen Eigenschaften der ausgehärteten hydraulisch abgebundenen Zusammensetzung stark erhöht sind.

Insbesondere ist das Polymer **P** geeignet zur Verwendung als Verflüssiger für hydraulisch abbindende Zusammensetzungen, insbesondere für Beton, Mörtel oder Gips. Ebenfalls geeignet ist das Polymer **P** als Dispergiermittel für wässrige Dispersionen.

Als hydraulisch abbindende Systeme oder Zusammensetzungen können grundsätzlich alle dem Beton-Fachmann bekannten hydraulisch abbindenden Substanzen verwendet werden. Insbesondere handelt es sich hier um hydraulische Bindemittel wie Zemente, wie beispielsweise Portlandzemente oder Tonerdeschmelzzemente und respektive deren Mischungen mit Flugaschen, Silica fume, Schlacke, Hüttensande und Kalksteinfiller. Weitere hydraulisch abbindende Substanzen im Sinne der vorliegenden Erfindung sind Gips, in Form von Anhydrit oder Halbhydrat, oder gebrannter Kalk. Als hydraulisch abbindende Zusammensetzung wird Zement bevorzugt. Weiterhin sind Zuschlagstoffe wie Sand, Kies, Steine, Quarzmehl, Kreiden sowie als Additive übliche Bestandteile wie andere Betonverfüssiger, beispielsweise Lignosulfonate, sulfonierte Naphthalin-Formaldehyd Kondensate, sulfonierte Melamin-Formaldehyd-Kondensate oder Polycarboxylatether, Beschleuniger, Korrosionsinhibitoren, Verzögerer, Schwindreduzierer, Entschäumer oder Porenbildner möglich.

Das Polymer **P** kann zur erfindungsgemässen Verwendung sowohl in flüssiger als auch in fester Form, sowohl allein oder als Bestandteil eines Zusatzmittels, insbesondere eines Dispergiermittels oder Verflüssigers verwendet werden. Die Erfindung betrifft daher zusätzlich ein Zusatzmittel in flüssiger oder fester Form umfassend mindestens ein erfindungsgemässes Polymer **P**.
Das Zusatzmittel kann ein einzelnes Polymer **P** oder eine Mischung mehrerer verschiedener Polymere **P** enthalten. Es können aber auch Polymere **P** mit anderen Dispergiermitteln oder Verflüssigern verwendet werden. Das Zusatzmittel kann auch weitere Bestandteile enthalten. Beispiele für weitere Bestandteile sind Lösungsmittel oder Additive, wie andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Schwindreduzierer, Entschäumer, oder Schaumbildner.
Je nach Herstellverfahren oder Reaktionsführung kann der Verflüssiger oder das Dispergiermittel zudem zusätzlich zum Polymer **P** freie Verbindungen der Ausgangsstoffe, insbesondere freie Monohydroxyverbindungen wie beispielsweise Polyalkylenglykol, insbesondere freies Polyethylenglykol, enthalten.

Falls das Polymer **P** in flüssiger Form verwendet wird, wird für die Umsetzung vorzugsweise ein Lösungsmittel eingesetzt. Bevorzugte Lösungsmittel sind beispielsweise Hexan, Toluol, Xylol, Methylcyclohexan, Cyclohexan oder Dioxan sowie Alkohole, insbesondere Ethanol oder Isopropanol, und Wasser, wobei Wasser das am meist bevorzugte Lösungsmittel ist.
Das Polymer **P** kann auch in festem Aggregatszustand vorliegen. Unter Polymere im festen Aggregatszustand versteht man im Sinne der Erfindung Polymere, die bei Raumtemperatur im festen Aggregatzustand vorliegen und beispielsweise Pulver, Schuppen, Pellets, Granulate oder Platten sind und sich in dieser Form problemlos transportieren und lagern lassen. Dabei kann das Polymer **P** bei der Herstellung direkt in den festen Aggregatszustand überführt werden, oder es wird zuerst in flüssiger Form hergestellt und anschliessend beispielsweise in Pulverform überführt, z.B. durch Sprühtrocknung, mit Hilfe von Schutzkolloiden oder anderen Trocknungshilfsmitteln.
Falls das Amin gemäss dem zweiten Verfahren erst in einem zweiten Schritt dazugegeben wird, kann beispielsweise das Amin in einem Lösungsmittel, bevorzugt Wasser, vorgelegt werden und das Produkt aus dem ersten Reaktionsschritt kann als Polymerschmelze oder aber in fester Form, etwa als Pulver oder in Form von Schuppen, oder eines Granulates unter Rühren zugegeben werden. Bei Benutzung von Lösungsmittel in der zweiten Stufe kann, falls dies gewünscht ist, das Lösungsmittel wieder entfernt werden, beispielsweise durch Anlegen eines Vakuums und/oder Heizen, oder es kann noch weiter verdünnt werden. Es ist auch möglich, dass auch das Amin im festen Aggregatszustand oder in oder auf einem Trägermaterial vorliegt.

In einem weiteren Aspekt betrifft die vorliegende Erfindung ein Bindemittel enthaltendes Gemisch umfassend mindestens ein hydraulisch abbindendes Bindemittel und mindestens ein erfindungsgemässes Polymer **P**. Als Bindemittel kommen beispielsweise Zement, insbesondere Portlandzemente oder Tonerdeschmelzzemente und respektive deren Mischungen mit Flugaschen, Silica fume, Schlacke, Hüttensande und Kalksteinfiller oder gebrannter Kalk, ein latent hydraulisches Pulver, inertes mikroskopisches Pulver oder Gips in Frage. Zum Term "Gips" wird jede bekannte Form von Gips gezählt, insbesondere Calciumsulfat-α-Halbhydrat, Calciumsulfat-β-Halbhydrat oder Calciumsulfat-Anhydrit. Als Bindemittel enthaltende Gemische kommen vorzugsweise Betonzusammensetzungen oder Gipszusammensetzungen in Frage.

Weiterhin kann das Gemisch weitere Zuschlagstoffe wie Sand, Kies, Steine, Quarzmehl, Kreiden sowie als Additive übliche Bestandteile wie andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Schwindreduzierer, Entschäumer, oder Schaumbildner enthalten.
Das Polymer **P** wird bevorzugt in einer Menge von 0.01 bis 10 Gew.-% bezogen auf das Gewicht des Bindemittels verwendet, um die gewünschte Wirkung zu erzielen. Es können auch mehrere Polymere **P** gemischt verwendet werden, um die gewünschte Wirkung zu erzielen.

In einem weiteren Aspekt betrifft die vorliegende Erfindung ein Verfahren zur Herstellung eines Bindemittels enthaltenden Gemisches wobei das mindestens eine Polymer **P** getrennt oder als Zusatzmittel vorgemischt in fester oder flüssiger Form dem Bindemittel zugegeben wird.

Besonders geeignet ist die Zugabe des Polymers **P** in fester Form. So kann das Polymer **P** im festen Aggregatszustand ein Bestandteil einer Zementzusammensetzung, einer sogenannten Trockenmischung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.
Das Polymer **P** kann auch einer üblichen Betonzusammensetzung oder Gipszusammensetzung mit oder kurz vor oder kurz nach der Zugabe des Wassers beigegeben werden. Als besonders geeignet gezeigt hat sich hierbei die Zugabe des Polymers **P** in Form einer wässrigen Lösung oder Dispersion, insbesondere als Anmachwasser oder als Teil des Anmachwassers. Die Herstellung der wässrigen Lösung oder Dispersion erfolgt durch Zusetzen von Wasser bei der Herstellung des Polymers **P** oder durch nachträgliches Vermengen von Polymer **P** mit Wasser. Typischerweise beträgt dabei der Anteil des Polymeren **P** 10 bis 90 Gewichts-%, insbesondere 20 bis 50 Gew.-%, bezogen auf das Gewicht der wässrigen Lösung oder Dispersion. Je nach Art des Polymers **P** entsteht eine Dispersion oder eine Lösung. Bevorzugt wird eine Lösung.

Das erfindungsgemässe Polymer **P** kann ein Bestandteil einer wässrigen Zusammensetzung sein, welche über längere Zeit lagerstabil ist, oder es kann ein Bestandteil einer hydraulisch abbindenden Zusammensetzung sein. Als Bestandteil einer hydraulisch abbindenden Zusammensetzung kann das Polymer **P** einer üblichen hydraulisch abbindenden Zusammensetzung mit oder kurz vor oder kurz nach der Zugabe des Wassers beigegeben werden. Als besonders geeignet gezeigt hat sich hierbei die Zugabe des Polymers **P** in Form einer wässrigen Lösung oder Dispersion, insbesondere als Anmachwasser oder als Teil des Anmachwassers.
Das Polymer **P** verfügt über besonders gute Eigenschaften als Verflüssiger für hydraulisch abbindende Zusammensetzungen, insbesondere zementöse Zusammensetzungen, das heisst, dass bei in der Zement- und Betontechnologie üblichen Wasser/Zement-(W/Z-)Verhältnissen die resultierende Mischung eine bedeutend grösseres Fliessverhalten aufweist im Vergleich zu einer Zusammensetzung ohne den Verflüssiger. Das Fliessverhalten wird typischerweise über das Ausbreitmass gemessen. Andererseits können Mischungen erzielt werden, die bei gleichem Fliessverhalten bedeutend weniger Wasser benötigen, so dass die mechanischen Eigenschaften der ausgehärteten hydraulisch abbindenden Zusammensetzung stark erhöht sind.
Überraschend ist auch, dass das erfindungsgemässe Polymer **P** sowohl in Betonzusammensetzungen wie auch in Gipszusammensetzungen gute verflüssigende Eigenschaften aufweist.

### Beispiele

### 1. Herstellvorschrift für erfindungsgemässes Polymer P-1, hergestellt mittels polymeranaloger Umsetzung

In einen Rundkolben mit mechanischem Rührer (IKA®-Rührwerk), Thermometer, Gaseinleitrohr und Destillationsbrücke wurden 240 g einer 40-prozentigen wässrigen Lösung (entspricht etwa 1 Mol Säureeinheiten) von Polymethacrylsäure (PMAS, mit einem mittleren Molekulargewicht M_{w} von etwa 4500 g/mol) und 2.5 g einer 50-prozentigen Schwefelsäure vorgelegt. Die Mischung wurde auf 50°C erwärmt und 360 g Polyethyleneglykol-Monomethylether (MPEG, mit einem mittlere Molekulargewicht M_{w} von etwa 1000 g/mol) zugegeben. Die Reaktionsmischung wurde unter N₂-Strom auf 175°C erwärmt. Das in der Mischung enthaltene Wasser sowie das Reaktionswasser wurden kontinuierlich unter N₂-Strom abdestilliert. Mit erreichen der Temperatur wurden 4.0 g einer 50-prozentigen wässrigen Lösung Natronlauge und 4.0 g Tetrahydrofurfurylalkohol (THF-OH, erhältlich bei Fluka, Schweiz) zur Reaktionsmischung gegeben und ein Vakuum von 80 mbar angelegt. Nach 2 ½ Stunden ist ein vollständiger Reaktionsumsatz erreicht. Die Polymerschmelze wurde wahlweise in Aluschalen von ca. 100 mm Durchmesser und ca. 7 mm Höhe gegossen und erstarren gelassen oder aber nach dem Abkühlen auf <100°C mit 475 g Wasser versetzt, um eine 50%ige Polymerlösung zu erhalten.

Die Polymere **P-2** bis **P-12** wurden in gleicher Weise wie Polymer **P-1** hergestellt mit den in der ***Tabelle 1*** angegebenen Ausgangsstoffen. Dabei wurde als Polycarbonsäure die Polymethacrylsäure (PMAS, mit einem mittleren Molekulargewicht M_{w} von etwa 4500 g/mol) als 40-prozentige wässrige Lösung verwendet, als Monohydroxyverbindung **F** gemäss Formel (IX) wurde Polyethyleneglykol-Monomethylether mit einem durchschnittlichen Molekulargewicht M_{w} von etwa 1000 g/mol (MPEG-1000) verwendet, und als Tetrahydrofufurylverbindung **G** gemäss Formel (X) wurde TetrahydrofurfurylAlkohol (THF-OH) oder Tetrahydrofurfuryl-Amin (THF-NH₂) oder Tetrahydrofurfuryl-polyethylenglykol mit einem durchschnittlichen Molekulargewicht M_{w} von etwa 200 g/mol, 1000 g/mol oder 2000 g/mol (THF-glykol 200, THF-glykol 1000, THF-glykol 2000) verwendet. Die THF-Verbindungen sind beispielsweise erhältlich bei Fluka, Schweiz. Als Aminverbindung **H** gemäss Formel (XI) wurde das Jefifamine® M-2070 (Jefifamine®), erhältlich bei Huntsman, verwendet.

**Tabelle 1: Erfindungsgemässe Polymere P-1 bis P-12. Die Mengen der einzelnen Einheiten sind in Mol-% angegeben, bezogen auf die Gesamtmolmenge aller Einheiten des Polymers. Verwendete Abkührzungen:PMAS = Polymethacrylsäure; MPEG-1000 = Polyethyleneglykol-Monomethylether mit einem durchschnittlichen Molekulargewicht M_{w} von 1000 g/mol; THF = Tetrahydrofurfuryl.**

| **Polymer** | **PMAS (Mol-%)** | **Verbindung F (MPEG-1000, Mol-%)** | **THF Verbindung G** | **Mol% THF Verbindung** | **Aminverbindung H** (Jeffamine®, Mol-%) |
|---|---|---|---|---|---|
| P-1 | 71.47 | 25.73 | THF-OH | 2.80 | 0 |
| P-2 | 71.45 | 25.72 | THF-NH2 | 2.83 | 0 |
| P-3 | 72.46 | 26.09 | THF-glyko1200 | 1.45 | 0 |
| P-4 | 73.29 | 26.38 | THF-glykol 1000 | 0.33 | 0 |
| P-5 | 73.41 | 26.43 | THF-glykol 2000 | 0.16 | 0 |
| P-6 | 72.49 | 26.09 | THF-OH | 1.42 | 0 |
| P-7 | 72.48 | 26.09 | THF-NH2 | 1.43 | 0 |
| P-8 | 72.99 | 26.28 | THF-glyko1200 | 0.73 | 0 |
| P-9 | 73.41 | 26.43 | THF-glykol 1000 | 0.16 | 0 |
| P-10 | 73.47 | 26.45 | THF-glykol 2000 | 0.08 | 0 |
| P-11 | 69.52 | 25.03 | THF-OH | 5.45 | 0 |
| P-12 | 71.37 | 25.69 | THF-OH | 2.80 | 0.14 |

### 2. Herstellvorschrift für erfindungsgemässes Polymer P-13, hergestellt mittels radikalischer Polymerisation

In einen 2000 ml Rundkolben mit mechanischem Rührer, Thermometer und Rückflusskühler wurden 8.8 g Natriumhyperphosphit gelöst in 500 g deionisiertes Wasser vorgelegt und auf 85-90°C erwärmt. Sobald die Temperatur erreicht war, wurden gleichzeitig über unterschiedliche Dosierpumpen die Monomermischung, bestehend aus 535g einer 50-prozentigen wässrigen Lösung eines Esters von Methacrylsäure mit Polyethyleneglykol-Monomethylether (M_{w} 1000 g/mol, erhältlich als Bisomer S10W bei Cognis GmbH, Deutschland), 63 g Methacrylsäure, 4 g Tetrahydrofurfurylmethacrylat (beide erhältlich bei Fluka, Schweiz) und 200 g Wasser und eine Lösung aus 2.4 g Natriumperoxodisulfat in 100 g Wasser innerhalb von 2 Stunden zudosiert. Anschliessend wurde bei 85-90°C nachreagieren gelassen bis der Peroxidtest negativ war.

### 3. Mörteltests

Die Wirksamkeit der erfindungsgemässen Polymeren wurde im Mörtel getestet.

| Zusammensetzung der Mörtelmischung **(MM):** (Grösstkorn 8mm) | Menge |
|---|---|
| Zement (Schweizer CEM I 42.5) | 750 g |
| Kalksteinfiller | 141 g |
| Sand 0-1 mm | 738 g |
| Sand 1-4 mm | 1107 g |
| Sand 4-8 mm | 1154 g |

Die Sande, der Filler und der Zement wurden 1 Minute in einem Hobart-Mischer trocken gemischt. Innerhalb von 30 Sekunden wurde das Anmachwasser, in dem 0.8 Gew.-% bezogen auf den Zement einer 30-%igen wässrigen Lösung eines erfindungsgemässen Polymers gelöst war, zugegeben und noch weitere 2.5 Minuten gemischt. Die 30-%ige wässrige Lösung, welche 30 Gew.-% des erfindungsgemässen Polymers enthält, enthält zudem etwa 1 Gew.-% Entschäumer. Die Gesamt-Mischzeit nass war 3 Minuten. Der Wasser/Zement-Wert (w/z-Wert) betrug 0.44.

Das Ausbreitmass des Mörtels wurde gemäss EN 1015-3 bestimmt.

Das Vergleichsbeispiel **V-1** ist ein herkömmlicher Polycarboxylat-Ester (PCE) Verflüssiger, wie es in Beispiel 3 in EP0604676A1 beschreiben ist.

**Tabelle 2: Ausbreitmass (ABM) in mm nach 0, 30, 60 und 90 Minuten (min)**

| | **ABM (mm)** | | | |
|---|---|---|---|---|
| **Polymer** | **0 min** | **30 min** | **60 min** | **90 min** |
| **P-1** | 225 | 215 | 216 | 213 |
| **P-2** | 202 | 194 | 194 | 194 |
| **P-3** | 220 | 210 | 203 | 204 |
| **P-4** | 208 | 195 | 188 | 188 |
| **P-5** | 205 | 192 | 192 | 193 |
| **P-6** | 205 | 195 | 192 | 195 |
| **P-7** | 204 | 186 | 190 | 186 |
| **P-8** | 213 | 203 | 198 | 196 |
| **P-9** | 206 | 198 | 194 | 192 |
| **P-10** | 212 | 192 | 194 | 190 |
| **P-11** | 196 | 196 | 200 | 194 |
| **P-12** | 190 | 185 | 178 | 178 |
| **P-13** | 238 | 216 | 212 | 198 |
| **V-1** | 178 | 138 | 132 | 126 |

Die Resultate in Tabelle 2 zeigen, dass die erfindungsgemässen Polymere hervorragende verflüssigende Eigenschaften aufweisen verglichen mit dem herkömmlichen Polymeren **V-1**. Dies zeigen vor allem die Werte des Ausbreitmasses nach 30 bis 90 Minuten, das heisst, das Ausbreitmass zeigt sich über 90 Minuten relativ konstant. Besonders gute Resultate werden mit Polymeren erzielt, welche über die polymeranaloge Reaktion hergestellt werden und welche als THF-Verbindung THF-OH verwenden, beispielsweise Polymere **P-1, P-6** und **P-11**. Ebenfalls ausgezeichnete Resultate wurden mit einem Polymer erzielt, welches über Polymerisation mit einem THF-Methacrylat hergestellt wurde, beispielsweise Polymer **P-13**.

### 4. Fliessverhalten im Calciumsulfat-α-Halbhydrat

Für einen Gipsslurry wurde zu 120 g Wasser das Polymer in einer gemäss Tabelle 3 definierten Menge gegeben, dann 300 g Calciumsulfat-α-Halbhydrat eingestreut und 1 Minute bei 1000 rpm gerührt. Das Ausbreitmass wurde nach 2, 5, und 10 Minuten mit dem Minikonus mit einem Durchmesser von 50 mm und einer Höhe von 51 mm und etwa 100ml Inhalt bestimmt. Mit dem Vicat-Nadelgerät nach DIN 1168 wurde das Versteifungsende (V-Ende) nach EN 13279-2 bestimmt. Das Versteifungsende (V-Ende) ist erreicht, wenn die Eindringtiefe des Tauchkonus in den Gipskuchen < 1 mm ist.

Vergleichsbeispiel **V-2** ist ein kommerziell erhältlicher, auf Melamin Basis hergestellter Gips-Verflüssiger (Melment® F15G von BASF).

**Tabelle 3: Ausbreitmass (ABM) in mm und Versteifungsende in Minuten (min) und Sekunden (sec)**

| | Dosierung (Gew.-%, bezogen auf das Calciumsulfat-α-Halbhydrat) | V-Ende (min:sec) | ABM | | | | |
|---|---|---|---|---|---|---|---|
| | | | 2 min | 5 min | 10 min | 15 min | 20 min |
| **ohne** | | 20:00 | 117 | 106 | 82 | 50 | |
| **V-2** | 0.2 | 32:00 | 178 | 178 | 175 | 170 | 155 |
| **P-1** | 0.1 | 30:16 | 181 | 178 | 176 | 167 | 155 |
| **P-3** | 0.1 | 24:30 | 177 | 175 | 165 | 101 | |
| **P-4** | 0.1 | 25:40 | 170 | 173 | 163 | 143 | 50 |
| **P-5** | 0.1 | 23:10 | 174 | 174 | 171 | 132 | |
| **P-12** | 0.1 | 23:30 | 174 | 179 | 166 | 127 | |
| **P-13** | 0.1 | 25:00 | 188 | 193 | 193 | 185 | 145 |

Tabelle 3 zeigt, dass im reinen Gipsslurry aus Calciumsulfat-α-Halbhydrat das Ausbreitmass und somit die Verarbeitbarkeit der Gipszusammensetzungen, welche erfindungsgemäss die Polymere **P-1, P-3, P-4, P-5, P-12** oder **P-13** enthalten, sehr gut ist, ohne zu verzögern. Der herkömmliche melaminbasierende Gipsverflüssiger (**V-2**) weist erst bei doppelter Dosierung das mit den erfindungsgemässen Polymeren erreichte Ausbreitmass auf. Zudem ist das Versteifungsende verzögert gegenüber den erfindungsgemässen Polymeren.

### 5. Fliessverhalten im Calciumsulfat-β-Halbhydrat

Für einen Gipsslurry wurden 136 g Wasser mit dem Verflüssiger in einer gemäss Tabelle 4 angegebenen Dosierung vorgelegt, dann 200 g Calciumsulfat-β-Halbhydrat innerhalb von 15 Sekunden eingestreut und der Gipsslurry 45 Sekunden sumpfen gelassen. Anschliessend wurde 1 Minute mit der Hand intensiv gerührt. Der Minikonus mit einem Durchmesser von 50 mm und einer Höhe von 51 mm wurde gefüllt und nach 2 Minuten und 15 Sekunden das Ausbreitmass (ABM) bestimmt. Mit dem Vicat-Nadelgerät nach DIN 1168 wurde der Versteifungsbeginn (V-Beginn) nach EN 13279-2 bestimmt. Das Versteifungsende (V-Ende) ist erreicht, wenn die Eindringtiefe des Tauchkonus in den Gipskuchen < 1 mm ist.

**Tabelle 4: Ausbreitmass (ABM) in mm und Versteifungsbeginn (V-Beginn) und Versteifungsende (V-Ende) in Minuten (min) und Sekunden (sec)**

| | Dosierung (Gew.-%, bezogen auf das Calciumsulfat-β-Halbhydrat) | V-Beginn (min:sec) | V-Ende (min:sec) | ABM in mm nach 2:15 (min:sec) |
|---|---|---|---|---|
| **ohne** | | 07:15 | 15:30 | 190 |
| **P-1** | 0.2 | 07:50 | 16:15 | 202 |
| **P-2** | 0.2 | 07:20 | 14:20 | 204 |
| **P-3** | 0.2 | 08:20 | 16:00 | 208 |
| **P-4** | 0.2 | 07:50 | 15:30 | 208 |
| **P-5** | 0.2 | 08:00 | 16:15 | 210 |
| **P-12** | 0.2 | 09:25 | 20:00 | 212 |
| **P-13** | 0.2 | 08:15 | 16:35 | 200 |
| **V-1** | 0.2 | 11:30 | 24:00 | 192 |
| **V-2** | 0.6 | 11:20 | 21:20 | 206 |

Tabelle 4 zeigt, dass im reinen Gipsslurry aus Calciumsulfat-β-Halbhydrat das Ausbreitmass und somit die Verarbeitbarkeit der Gipszusammensetzungen, welche die erfindungsgemässen Polymere enthalten, sehr gut ist, ohne zu verzögern. Bei den herkömmlichen Verflüssigern ist insbesondere der Versteifungsbeginn und das Versteifungsende verzögert (**V-1, V-2**) gegenüber den erfindungsgemäss verwendeten Polymeren. Zudem weist der herkömmliche melaminbasierende Gipsverflüssiger **(V-2)** erst bei dreifacher Dosierung das mit den erfindungsgemässen Polymeren erreichte Ausbreitmass auf.

Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung wie in den Ansprüchen definiert zu verlassen.

## Patentansprüche

1. Estergruppen aufweisendes Polymer **P** umfassend
a) mindestens eine Struktureinheit **A** der Formel (I); 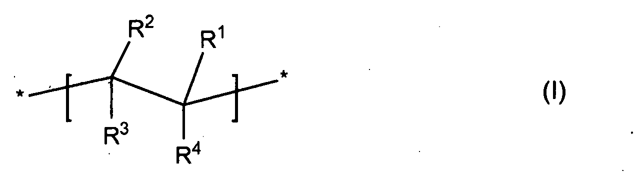
b) mindestens eine Struktureinheit **B** der Formel (II); 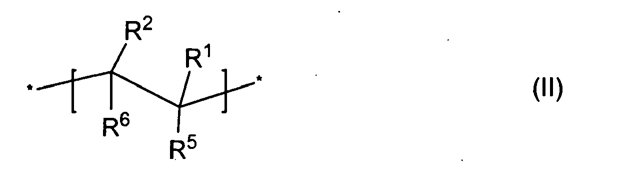
c) mindestens eine Struktureinheit **C** der Formel (III); 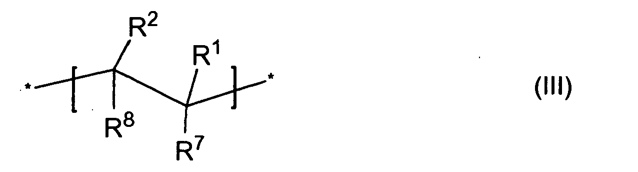 gegebenenfalls
d) mindestens eine Struktureinheit **D** der Formel (IV); 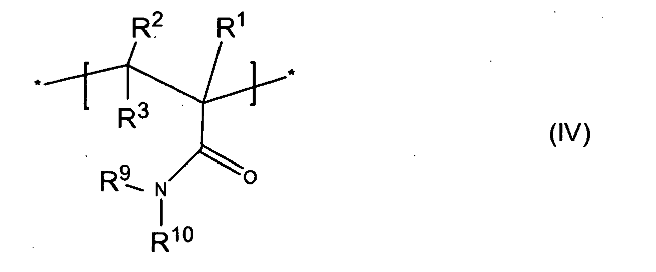 und gegebenenfalls
e) mindestens eine weitere Struktureinheit **E**;
wobei R¹ unabhängig voneinander für H, CH₂COOM oder eine Alkylgruppe mit 1 bis 5 Kohlenstoffatomen steht,
wobei R² unabhängig voneinander für H, eine Alkylgruppe mit 1 bis 5 Kohlenstoffatomen, COOM oder CH₂COOM steht;
wobei R³ unabhängig voneinander für H, CH₃, COOM oder CH₂COOM steht; und
wobei R⁴ unabhängig voneinander für COOM steht;
oder wobei R³ mit R⁴ einen Ring bildet zu -CO-O-CO-;
wobei M für H, einen C₁ - C₅-Alkylrest, Alkalimetall, Erdalkalimetall oder andere zwei- oder dreiwertige Metallatome, Ammonium, eine organische Ammoniumgruppe, oder eine Mischung davon steht;
wobei R⁵ unabhängig voneinander für 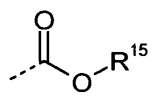 steht, wobei R¹⁵ für -[(R¹¹O)ₓ-(R¹²O)_{y}-(R¹³O)_{z}]-R¹⁴ steht;
wobei R¹¹, R¹² und R¹³ je unabhängig voneinander eine C₂ - C₄ Alkylengruppe bedeutet mit einer Reihenfolge der (R¹¹O)-, (R¹²O)-, und (R¹³O)-Einheiten in irgendeiner möglichen Sequenz;
wobei R¹⁴ für H, einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x, y, z unabhängig voneinander je die Werte 0 - 250 aufweisen und x+y+z = 3 - 250 ist;
wobei R⁶ unabhängig voneinander für H, CH₃, COOM, CH₂COOM oder einen Substituenten wie für R⁵ oder R⁷ definiert steht;
wobei R⁷ unabhängig voneinander für einen Rest der Formel (V) steht; 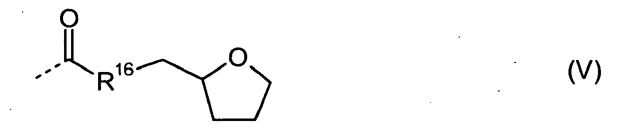 wobei R¹⁶ unabhängig voneinander für NH, -NH-(R¹⁷)_{q}-, O, oder -O-(R¹⁸)ₛ- steht,
wobei R¹⁷ und R¹⁸ je unabhängig voneinander für eine C₁ - C₁₂ Alkylengruppe, oder eine oder mehrere C₂ - C₄ Oxyalkylengruppen mit einer Reihenfolge in irgendeiner möglichen Sequenz, stehen;
wobei q unabhängig voneinander eine ganze Zahl ist und den Wert 1 aufweist, falls R¹⁷ eine C₁ - C₁₂ Alkylengruppe ist, und je den Wert 1 - 150 aufweist, falls R¹⁷ eine oder mehrere C₂ - C₄ Oxyalkylengruppen ist;
wobei s unabhängig voneinander eine ganze Zahl ist und den Wert 1 aufweist, falls R¹⁸ eine C₁ - C₁₂ Alkylengruppe ist, und je den Wert 1 - 150 aufweist, falls R¹⁸ eine oder mehrere C₂ - C₄ Oxyalkylengruppen ist;
wobei R⁸ unabhängig voneinander für H, CH₃, COOM, CH₂COOM oder einen Substituenten wie für R⁵ oder R⁷ definiert steht;
wobei R⁹ und R¹⁰ zusammen einen Ring bilden, der gegebenenfalls Sauerstoff-, Schwefel- oder weitere Stickstoffatome enthält;
oder wobei R⁹ und R¹⁰ unabhängig voneinander H, eine C₁ - C₂₀ Alkylgruppe, eine C₅ - C₉ Cycloalkyl-Gruppe, einer7 - C₁₂ AralkylGruppe, eine Hydroxyalkylgruppe oder eine Verbindung der Formel (VI), (VII) oder (VIII) darstellen,
-R¹⁹-X(R²⁰)ᵣ (VI) 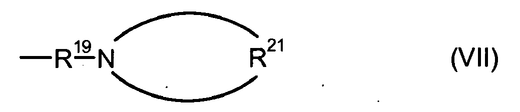
-[(R^{11'}O)_{x'}-(R^{12'}O)_{y'}-(R^{13'}O)_{z'}]-R^{14'} (VIII)
wobei R¹⁹ unabhängig voneinander eine Alkylengruppe und R²⁰ unabhängig voneinander eine C₁- bis C₄-Alkylgruppe, und X unabhängig voneinander ein S, O oder N darstellt, wobei r = 1, falls X= S oder O, oder r = 2, falls X = N;
wobei R²¹ eine Alkylengruppe mit gegebenenfalls Heteroatomen ist;
wobei R¹¹, R^{12'} und R^{13'} je unabhängig voneinander eine C₂ - C₄ Alkylengruppe bedeutet mit einer Reihenfolge der (R^{11'}O)-, (R^{12'}O)-, und (R^{13'}O)-Einheiten in irgendeiner möglichen Sequenz;
wobei R^{14'} für einen C₁ - C₁₂ Alkyl- oder Cycloalkylrest, einen C₇ - C₂₀ Alkylaryl- oder Aralkylrest, oder einen substituierten oder unsubstituierten Arylrest steht; und
wobei x', y', z' unabhängig voneinander je die Werte 0 - 100 aufweisen und x'+y'+z' = 1 - 100 ist.

2. Polymer **P** gemäss Anspruch 1, erhältlich durch oder hergestellt mittels polymeranaloger Reaktion der Veresterung und gegebenenfalls Amidierung einer Polycarbonsäure.

3. Polymer **P** gemäss Anspruch 2, erhältlich durch die Reaktion von
a) mindestens einer Polycarbonsäure oder Analogon einer Polycarbonsäure; und
b) mindestens einer Monohydroxyverbindung **F** der Formel (IX)
HO-[(R¹¹O)ₓ-(R¹²O)_{y}-(R¹³O)_{z}]-R^{14"} (IX)
wobei R¹¹, R¹² und R¹³ je unabhängig voneinander eine C₂ - C₄ Alkylengruppe bedeutet mit einer Reihenfolge der (R¹¹O)-, (R¹²O)-, und (R¹³O)-Einheiten in irgendeiner möglichen Sequenz;
wobei R^{14"} für einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x, y, z unabhängig voneinander je die Werte 0 - 250 aufweisen und x+y+z = 3 - 250 ist; und
c) mindestens einer Tetrahydrofurfuryl-Verbindung **G** der Formel (X) 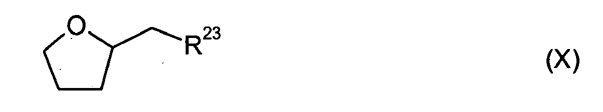 wobei R²³ unabhängig voneinander für -NH₂, -(R¹⁷)_{q}-NH₂, -OH, oder -(R¹⁸)ₛ-OH steht,
wobei R¹⁷ und R¹⁸ je unabhängig voneinander für eine C₁ - C₁₂ Alkylengruppe, oder eine oder mehrere C₂ - C₄ Oxyalkylengruppen mit einer Reihenfolge in irgendeiner möglichen Sequenz, stehen;
wobei q unabhängig voneinander eine ganze Zahl ist und den Wert 1 aufweist, falls R¹⁷ eine C₁ - C₁₂ Alkylengruppe ist, und je den Wert 1 - 150 aufweist, falls R¹⁷ eine oder mehrere C₂ - C₄ Oxyalkylengruppen ist;
wobei s unabhängig voneinander eine ganze Zahl ist und den Wert 1 aufweist, falls R¹⁸ eine C₁ - C₁₂ Alkylengruppe ist, und je den Wert 1 - 150 aufweist, falls R¹⁸ eine oder mehrere C₂ - C₄ Oxyalkylengruppen ist; und
gegebenenfalls
d) mindestens einer Aminverbindung **H** der Formel (XI)
R^{9'}-NH-R^{10'} v
und/oder mindestens einer Aminverbindung H' der Formel (XI')
R^{9"}-NH-R^{10"} (XI')
wobei R^{9'} und R^{10'} zusammen einen Ring bilden, der gegebenenfalls Sauerstoff-, Schwefel- oder weitere Stickstoffatome enthält;
oder wobei R^{9'} und R^{10'} unabhängig voneinander H, eine C₈ - C₂₀ Alkylgruppe, eine C₅ - C₉ Cycloalkyl-Gruppe, eine C₇ - C₁₂ AralkylGruppe, oder eine Verbindung der Formel (VI), (VII) oder (VIII) darstellen,
wobei R^{9"} und R^{10"} zusammen einen Ring bilden, der gegebenenfalls Sauerstoff-, Schwefel- oder weitere Stickstoffatome enthält;
oder wobei R^{9"} und R^{10"} unabhängig voneinander H, eine C₁ - C₁₂ Alkylgruppe, eine C₅ - C₉ Cycloalkyl-Gruppe, eine C₇ - C₁₂ AralkylGruppe, eine Hydroxyalkylgruppe, oder eine Verbindung der Formel (VI), (VII) oder (VIII) darstellen,
-R¹⁹-X(R²⁰)ᵣ (VI) 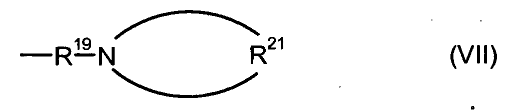
-[(R¹¹'O)_{x'}-(R^{12'}O)_{y}'-(R^{13'}O)_{z'}]-R^{14'} (VIII)
wobei R¹⁹ unabhängig voneinander eine Alkylengruppe und R²⁰ unabhängig voneinander eine C₁- bis C₄-Alkylgruppe, und X unabhängig voneinander ein S, O oder N darstellt, wobei r = 1, falls X= S oder O, oder r = 2, falls X = N;
wobei R²¹ eine Alkylengruppe mit gegebenenfalls Heteroatomen ist; wobei R^{11'}, R^{12'} und R^{13'} je unabhängig voneinander eine C₂ - C₄ Alkylengruppe, bedeutet mit einer Reihenfolge der (R^{11'}O)-, (R^{12'}O)-, und (R^{13'}O)-Einheiten in irgendeiner möglichen Sequenz;
wobei R^{14'} für einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x', y', z' unabhängig voneinander je die Werte 0 - 100 aufweisen und x'+y'+z' = 1 - 100 ist; und
gegebenenfalls
e) mindestens einer weiteren Verbindung **J**.

4. Polymer **P** gemäss Anspruch 3, **dadurch gekennzeichnet, dass** die mindestens eine Polycarbonsäure oder das Analogon einer Polycarbonsäure mit mindestens einer Monohydroxyverbindung F der Formel (IX) und mindestens einer Tetrahydrofurfurylverbindung G der Formel (X) und gegebenenfalls mindestens einer Aminverbindung **H** der Formel (X1) und gegebenenfalls mindestens einer weiteren Verbindung **J** bei einer Temperatur bis 200°C umgesetzt wird, so dass Anhydridgruppen entstehen, und dass in einem zweiten Schritt die im ersten Schritt gebildeten Anhydridgruppen vollständig oder teilweise mit einer Aminverbindung **H'** der Formel (XI') bei Temperaturen deutlich unter 100°C zum Amid umgesetzt werden.

5. Polymers **P** gemäss Anspruch 3 oder 4, **dadurch gekennzeichnet, dass** das Analogon der Polycarbonsäure ausgewählt ist aus der Gruppe Säuresalze, Säurehalogenide, Säureanhydride und Säureester.

6. Polymer **P** gemäss einem der Ansprüche 3 bis 5, **dadurch gekennzeichnet, dass** das Molekulargewicht der mindestens einen Hydroxyverbindung **F** der Formel (IX) etwa 120-20'000 g/mol, insbesondere etwa 250-10'000 g/mol, ist.

7. Polymer **P** gemäss Anspruch 1, erhältlich durch oder hergestellt mittels einer radikalischen Polymerisationsreaktion.

8. Polymer **P** gemäss Anspruch 7, erhältlich durch die Polymerisationsreaktion in Gegenwart von mindestens einem Radikalbildner von
a) mindestens einer ethylenisch ungesättigten Mono- oder Dicarbonsäure **M** oder einem Analogon von einer ungesättigten Mono- oder Dicarbonsäure; mit
b) mindestens einem ethylenisch ungesättigten Carbonsäurederivat **K** der Formel (XIII); 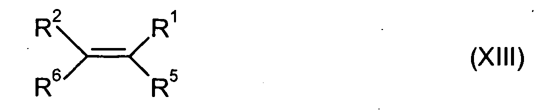 und
c) mindestens einem zweiten ethylenisch ungesättigten Carbonsäurederivat **L** der Formel (XIV); 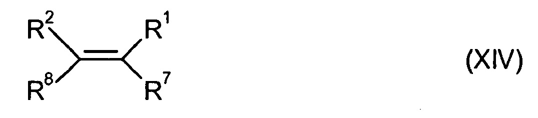 und gegebenenfalls
d) mindestens einem dritten ethylenisch ungesättigten Carbonsäurederivat **N** der Formel (XV); 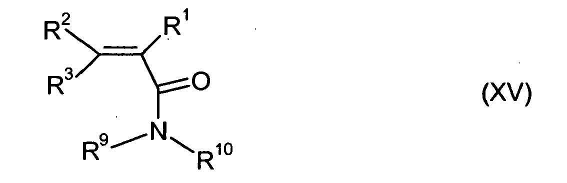 und gegebenenfalls
e) mindestens einer weiteren ethylenisch ungesättigten Verbindung **Q,**
wobei R¹ unabhängig voneinander für H, CH₂COOM oder eine Alkylgruppe mit 1 bis 5 Kohlenstoffatomen steht,
wobei R² unabhängig voneinander für H, eine Alkylgruppe mit 1 bis 5 Kohlenstoffatomen, COOM oder CH₂COOM steht;
wobei R³ unabhängig voneinander für H, CH₃, COOM oder CH₂COOM steht;
wobei M für H, einen C₁ - C₅-Alkylrest, Alkalimetall, Erdalkalimetall oder andere zwei- oder dreiwertige Metallatome, Ammonium, eine organische Ammoniumgruppe, oder eine Mischung davon steht;
wobei R⁵ unabhängig voneinander für 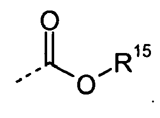 steht,
wobei R¹⁵ für -[(R¹¹O)ₓ-(R¹²O)_{y}-(R¹³O)_{z}]-R¹⁴ steht;
wobei R¹¹, R¹² und R¹³ je unabhängig voneinander eine C₂ - C₄ Alkylengruppe bedeutet mit einer Reihenfolge der (R¹¹O)-, (R¹²O)-, und (R¹³O)-Einheiten in irgendeiner möglichen Sequenz;
wobei R¹⁴ für H, einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x, y, z unabhängig voneinander je die Werte 0 - 250 aufweisen und x+y+z = 3 - 250 ist;
wobei R⁶ unabhängig voneinander für H, CH₃, COOM, CH₂COOM oder einen Substituenten wie für R⁵ oder R⁷ definiert steht;
wobei R⁷ unabhängig voneinander für einen Rest der Formel (V) steht; 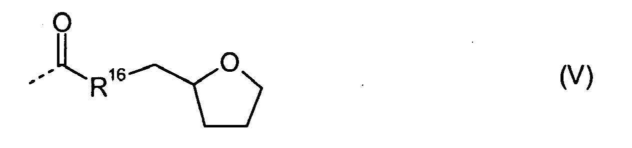 wobei R¹⁶ unabhängig voneinander für NH, -NH-(R¹⁷)_{q}-, O, oder -O-(R¹⁸)ₛ- steht,
wobei R¹⁷ und R¹⁸ je unabhängig voneinander für eine C₁ - C₁₂ Alkylengruppe, oder eine oder mehrere C₂ - C₄ Oxyalkylengruppen mit einer Reihenfolge in irgendeiner möglichen Sequenz, stehen;
wobei q unabhängig voneinander eine ganze Zahl ist und den Wert 1 aufweist, falls R¹⁷ eine C₁ - C₁₂ Alkylengruppe ist, und je den Wert 1 - 150 aufweist, falls R¹⁷ eine oder mehrere C₂ - C₄ Oxyalkylengruppen ist;
wobei s unabhängig voneinander eine ganze Zahl ist und den Wert 1 aufweist, falls R¹⁸ eine C₁ - C₁₂ Alkylengruppe ist, und je den Wert 1 - 150 aufweist, falls R¹⁸ eine oder mehrere C₂ - C₄ Oxyalkylengruppen ist;
wobei R⁸ unabhängig voneinander für H, CH₃, COOM, CH₂COOM oder einen Substituenten wie für R⁵ oder R⁷ definiert steht;
wobei R⁹ und R¹⁰ zusammen einen Ring bilden, der gegebenenfalls Sauerstoff-, Schwefel- oder weitere Stickstoffatome enthält;
oder wobei R⁹ und R¹⁰ unabhängig voneinander H, eine C₁ - C₁₂ Alkylgruppe, eine C₅ - C₉ Cycloalkyl-Gruppe, eine C₇ - C₁₂ AralkylGruppe, eine Hydroxyalkylgruppe oder eine Verbindung der Formel (VI), (VII) oder (VIII) darstellen,
-R¹⁹-X(R²⁰)ᵣ (VI) 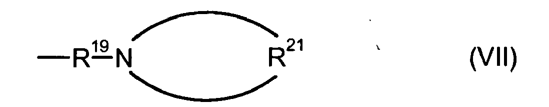
-[(R¹¹'O)_{x'}-(R^{12'}O)_{y'}-(R¹³'O)_{z'}]-R^{14'} (VIII)
wobei R¹⁹ unabhängig voneinander eine Alkylengruppe und R²⁰ unabhängig voneinander eine C₁- bis C₄-Alkylgruppe, und X unabhängig voneinander ein S, O oder N darstellt, wobei r = 1, falls X= S oder O, oder r = 2, falls X = N;
wobei R²¹ eine Alkylengruppe mit gegebenenfalls Heteroatomen ist; wobei R^{11'}, R^{12'} und R^{13'} je unabhängig voneinander eine C₂ - C₄ Alkylengruppe bedeutet mit einer Reihenfolge der (R^{11'}O)-, (R^{12'}O)-, und (R^{13'}O)-Einheiten in irgendeiner möglichen Sequenz;
wobei R^{14'} für einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x', y', z' unabhängig voneinander je die Werte 0 - 100 aufweisen und x'+y'+z' = 1 - 100 ist;

9. Polymer **P** gemäss einem der vorhergehenden Ansprüche, **dadurch gekennzeichnet, dass** R¹ H oder CH₃ ist und R², R³ und M für H stehen.

10. Polymer **P** gemäss einem der vorhergehenden Ansprüche, **dadurch gekennzeichnet, dass** R⁶ und R⁸ für H stehen.

11. Polymer **P** gemäss einem der vorhergehenden Ansprüche, **dadurch gekennzeichnet, dass** R¹⁶ für O oder NH steht.

12. Polymer **P** gemäss einem der Ansprüche 1 bis 10, **dadurch gekennzeichnet, dass** R¹⁶ für OR¹⁸ steht und R¹⁸ für -(CH₂CH₂O)₂-steht.

13. Polymer **P** gemäss einem der vorhergehenden Ansprüche, **dadurch gekennzeichnet, dass** R¹¹ unabhängig voneinander für eine C₂-Alkylengruppe, R¹² unabhängig voneinander für eine C₃-Alkylengruppe und R¹³ unabhängig voneinander für eine C₄-Alkylengruppe steht, und wobei die Reihenfolge von (R¹¹O), (R¹²O) und (R¹³O) zufällig, alternierend oder blockweise ist.

14. Polymer **P** gemäss Anspruch 13, **dadurch gekennzeichnet, dass** R¹⁵ mindestens 30 Mol-% (R¹¹O)-Einheiten, vorzugsweise 50 bis 100 Mol-% (R¹¹O)-Einheiten, noch mehr bevorzugt 80 bis 100 Mol-% (R¹¹O)-Einheiten umfasst, bezogen auf die Gesamtmolmenge aller (R¹¹O)-, (R¹²O)- und (R¹³O)-Einheiten.

15. Polymer **P** gemäss einem der vorhergehenden Ansprüche, umfassend 5 bis 95 Mol-%, vorzugsweise 20 bis 80 Mol-% der Struktureinheit **A** der Formel (I), 1 bis 90 Mol-%, vorzugsweise 15 bis 70 Mol-% der Struktureinheit **B** der Formel (II), 0.001 bis 10 Mol-%, vorzugsweise 0.01 bis 6 Mol-% der Struktureinheit **C** der Formel (III), gegebenenfalls 0 bis 30 Mol-%, vorzugsweise 0 bis 1 Mol-% der Struktureinheit **D** der Formel (IV), und gegebenenfalls 0 bis 30 Mol-%, vorzugsweise 0 bis 1 Mol-% der Struktureinheit E, jeweils bezogen auf die Gesamtmolmenge der Struktureinheiten von **A, B, C, D** und **E** im Polymer **P**.

16. Verwendung eines Polymers **P** gemäss einem der vorhergehenden Ansprüche als Verflüssiger für hydraulisch abbindende Zusammensetzungen, insbesondere für Beton, Mörtel oder Gips.

17. Verwendung eines Polymers **P** gemäss einem der Ansprüche 1 bis 15 als Dispergiermittel für wässrige Dispersionen.

18. Zusatzmittel in flüssiger oder fester Form umfassend mindestens ein Polymer **P** gemäss einem der Ansprüche 1 bis 15.

19. Bindemittel enthaltendes Gemisch umfassend mindestens ein hydraulisch abbindendes Bindemittel und mindestens ein Polymer **P** gemäss einem der Ansprüche 1 bis 15 in einer Menge von 0.01 bis 10 Gew.-% bezogen auf das Gewicht des Bindemittels.

20. Gemisch gemäss Anspruch 19, **dadurch gekennzeichnet, dass** das Bindemittel ausgewählt ist aus der Gruppe bestehend aus Zement, einem latent hydraulischen Pulver, einem oder mehreren inerten mikroskopischen Pulvern, Gips, oder Mischungen davon.

21. Gemisch gemäss einem der Ansprüche 19 oder 20, **dadurch gekennzeichnet, dass** das Gemisch Beton, Mörtel oder Gips ist.

22. Verfahren zur Herstellung von einem Bindemittel enthaltenden Gemisch gemäss einem der Ansprüche 19 bis 21, **dadurch gekennzeichnet, dass** das Polymer **P** gemäss einem der Ansprüche 1 bis 15 getrennt oder als Zusatzmittel vorgemischt in fester oder-flüssiger Form zugegeben wird.

## Claims

1. A polymer **P** having ester groups and comprising
a) at least one structural unit **A** of the formula (I); 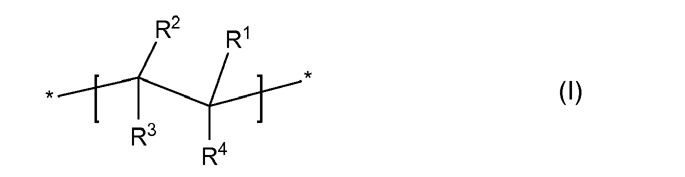
b) at least one structural unit **B** of the formula (II); 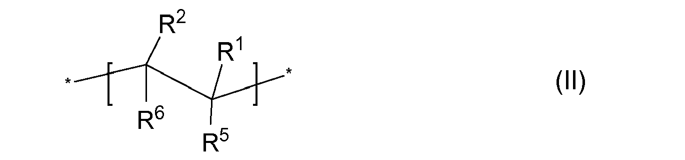
c) at least one structural unit **C** of the formula (III); 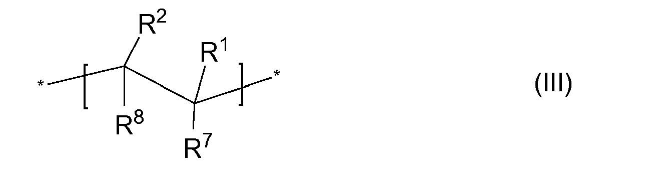 optionally
d) at least one structural unit **D** of the formula (IV); 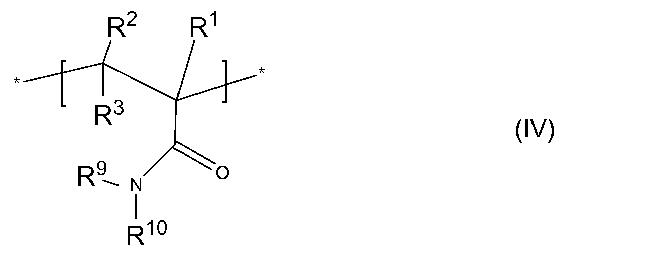 and optionally
e) at least one further structural unit **E**;
R¹, independently of one another, being H, CH₂COOM or an alkyl group having 1 to 5 carbon atoms,
R² independently of one another, being H, an alkyl group having 1 to 5 carbon atoms, COOM or CH₂COOM;
R³, independently of one another, being H, CH₃, COOM or CH₂COOM; and
R⁴, independently of one another, being COOM;
or R³ together with R⁴ forming a ring as -CO-O-CO-;
M being H, a C₁-C₅ alkyl radical, alkali metal, alkaline earth metal or other di- or trivalent metal atoms, ammonium, an organic ammonium group or a mixture thereof;
and R⁵, independently of one another, being 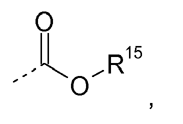 R¹⁵ being -[(R¹¹O)ₓ-(R¹²O)_{y}-(R¹³O)_{z}]-R¹⁴;
R¹¹, R¹² and R¹³, in each case independently of one another, being a C₂-C₄ alkylene group with an order of the (R¹¹O), (R¹²O) and (R¹³O) units in any possible sequence;
R¹⁴ being H, a C₁-C₁₂ alkyl or cycloalkyl radical, a C₇-C₂₀ alkylaryl or aralkyl radical, or a substituted or unsubstituted aryl radical;
x, y, z, independently of one another, each having the values 0-250 and x+y+z being 3-250;
R⁶, independently of one another, being H, CH₃, COOM, CH₂COOM or a substituent as defined for R⁵ or R⁷;
in which R⁷, independently of one another, is a radical of the formula (V); 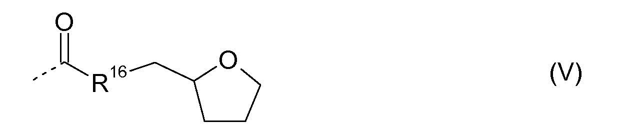 in which R¹⁶, independently of one another, is NH, -NH-(R¹⁷)_{q}-, O, or -O-(R¹⁸)ₛ-, in which R¹⁷ and R¹⁸, in each case independently of one another, are a C₁ - C₁₂ alkylene group or one or more C₂ - C₄ oxyalkylene groups with an order in any possible sequence;
in which q, independently of one another, is an integer and has the value 1 if R¹⁷ is a C₁ -C₁₂ alkylene group and in each case has the value 1 - 150 if R¹⁷ is one or more C₂ - C₄ oxyalkylene groups;
in which s, independently of one another, is an integer and has the value 1 if R¹⁸ is a C₁ - C₁₂ alkylene group and in each case has the value 1 - 150 if R¹⁸ is one or more C₂ - C₄ oxyalkylene groups;
R⁸, independently of one another, being H, CH₃, COOM, CH₂COOM or a substituent as defined for R⁵ or R⁷;
R⁹ and R¹⁰ together forming a ring which optionally contains oxygen, sulfur or further nitrogen atoms;
or R⁹ and R¹⁰, independently of one another, being H, a C₁-C₂₀ alkyl group, a C₅-C₉ cycloalkyl group, a C₇-C₁₂ aralkyl group, a hydroxyalkyl group or a compound of the formula (VI), (VII) or (VIII),
-R¹⁹-X(R²⁰)ᵣ (VI) 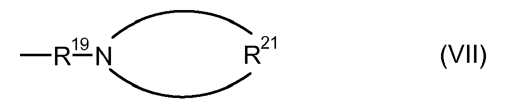
-r(R^{11'}O)ₓ-(R^{12'}O)_{y'}-(R¹³'O)_{z'}]-R^{14'} (VIII)
R¹⁹, independently of one another, being an alkylene group and R²⁰, independently of one another, being a C₁- to C₄-alkyl group, and
X, independently of one another, being an S, O or N, where r = 1 if X= S or O, or r = 2 if X = N;
R²¹ being an alkylene group optionally having heteroatoms;
R^{11'}, R^{12'} and R^{13'}, in each case independently of one another, being a C₂-C₄ alkylene group with an order of the (R^{11'}O), (R^{12'}O) and (R^{13'}O) units in any possible sequence;
R^{14'} being a C₁-C₁₂ alkyl or cycloalkyl radical, a C₇-C₂₀ alkylaryl or aralkyl radical, or a substituted or unsubstituted aryl radical; and
x', y', z', independently of one another, having the values 0-100 and x'+y'+z' = 1-100.

2. The polymer **P** as claimed in claim 1, obtainable by or prepared by means of polymer-analogous reaction of the esterification and optionally amidation of a polycarboxylic acid.

3. The polymer **P** as claimed in claim 2, obtainable by the reaction of
a) at least one polycarboxylic acid or analog of a polycarboxylic acid; and
b) at least one monohydroxy compound **F** of the formula (IX)
HO-[(R¹¹O)ₓ-(R¹²O)_{y}-(R¹³O)_{z}]-R^{14"} (IX)
R¹¹, R¹² and R¹³, in each case independently of one another, being a C₂-C₄ alkylene group with an order of the (R¹¹O), (R¹²O) and (R¹³O) units in any possible sequence;
R^{14"} being a C₁-C₁₂ alkyl or cycloalkyl radical, a C₇-C₂₀ alkylaryl or aralkyl radical, or a substituted or unsubstituted aryl radical;
x, y, z, independently of one another, each having the values 0-250 and x+y+z being 3-250; and
c) at least one tetrahydrofurfuryl compound **G** of the formula (X) 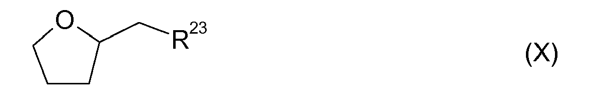 in which, R²³, independently of one another, is -NH₂, -(R¹⁷)_{q}-NH₂, -OH or -(R¹⁸)ₛ-OH,
in which R¹⁷ and R¹⁸, in each case independently of one another, are a C₁ - C₁₂ alkylene group or one or more C₂ - C₄ oxyalkylene groups with an order in any possible sequence;
in which *q*, independently of one another, is an integer and has the value 1 if R¹⁷ is a C₁ - C₁₂ alkylene group and in each case has the value 1 - 150 if R¹⁷ is one or more C₂ - C₄ oxyalkylene groups;
in which s, independently of one another, is an integer and has the value 1 if R¹⁸ is a C₁ - C₁₂ alkylene group and in each case has the value 1 - 150 if R¹⁸ is one or more C₂ - C₄ oxyalkylene groups; and
optionally
d) at least one amine compound H of the formula (XI)
R^{9'}-NH-R^{10'} (XI)
and/or at least one amine compound H' of the formula (XI')
R^{9"}-NH-R^{10"} (XI')
R^{9'} and R^{10'} together forming a ring which optionally contains oxygen, sulfur or further nitrogen atoms;
or R^{9'} and R^{10'}, independently of one another, being H, a C₈-C₂₀ alkyl group, a C₅-C₉ cycloalkyl group, a C₇-C₁₂ aralkyl group or a compound of the formula (VI), (VII) or (VIII),
R^{9"} and R^{10"} together forming a ring which optionally contains oxygen, sulfur or further nitrogen atoms;
or R^{9"} and R^{10"}, independently of one another, being H, a C₁-C₁₂ alkyl group, a C₅-C₉ cycloalkyl group, C₇-C₁₂ aralkyl group, hydroxyalkyl group or a compound of the formula (VI), (VII) or (VIII),
-R¹⁹-X(R²⁰)ᵣ (VI) 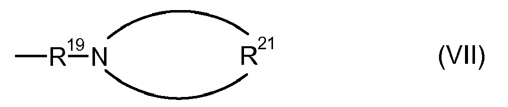
-[(R^{11'}O)_{x'}-(R^{12'}O)_{y'}-(R^{13'}O)_{z'}]- R¹⁴ (VIII)
R¹⁹, independently of one another, being an alkylene group and R²⁰, independently of one another, being a C₁- to C₄-alkyl group, and
X, independently of one another, being an S, O or N, where r = 1 if X= S or O, or r = 2 if X = N;
R²¹ being an alkylene group optionally having heteroatoms;
R^{11'}, R^{12'} and R^{13'}, in each case independently of one another, being a C₂-C₄ alkylene group with an order of the (R^{11'}O), (R^{12'}O) and (R^{13'}O) units in any possible sequence;
R^{14'} being a C₁-C₁₂ alkyl or cycloalkyl radical, a C₇-C₂₀ alkylaryl or aralkyl radical, or a substituted or unsubstituted aryl radical;
x', y', z', independently of one another, each having the values 0-100 and x'+y'+z' being 1-100; and
optionally
e) at least one further compound **J.**

4. The polymer **P** as claimed in claim 3, **characterized in that** the at least one polycarboxylic acid or the analog of a polycarboxylic acid is reacted with at least one monohydroxy compound **F** of the formula (IX) and at least one tetrahydrofurfuryl compound **G** of the formula (X) and optionally at least one amine compound **H** of the formula (XI) and optionally at least one further compound **J** at a temperature up to 200°C, so that anhydride groups form, and **in that**, in a second stage, the anhydride groups formed in the first stage are completely or partly reacted with an amine compound **H'** of the formula (XI') at temperatures substantially below 100°C to give the amide.

5. The polymer **P** as claimed in claim 3 or 4, **characterized in that** the analog of the polycarboxylic acid is selected from the group consisting of acid salts, acid halides, acid anhydrides and acid esters.

6. The polymer **P** as claimed in any of claims 3 to 5, **characterized in that** the molecular weight of the at least one hydroxy compound **F** of the formula (IX) is about 120-20 000 g/mol, in particular about 250-10 000 g/mol.

7. The polymer **P** as claimed in claim 1, obtainable by or prepared by means of a free radical polymerization reaction.

8. The polymer **P** as claimed in claim 7, obtainable by the polymerization reaction, in the presence of at least one free radical initiator, of
a) at least one ethylenically unsaturated mono- or dicarboxylic acid **M** or an analog of an unsaturated mono- or dicarboxylic acid; with
b) at least one ethylenically unsaturated carboxylic acid derivative **K** of the formula (XIII); 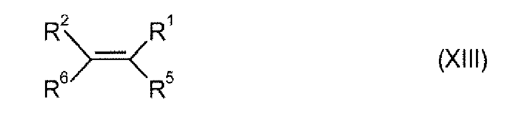 and
c) at least one second ethylenically unsaturated carboxylic acid derivative L of the formula (XIV); 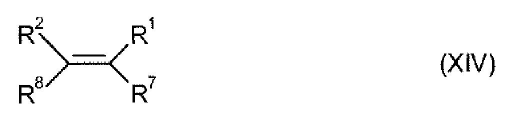 and optionally
d) at least one third ethylenically unsaturated carboxylic acid derivative **N** of the formula (XV); 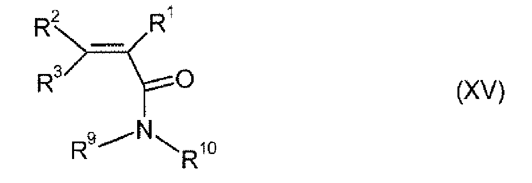 and optionally
e) at least one further ethylenically unsaturated compound **Q,**
R¹, independently of one another, being H, CH₂COOM or an alkyl group having 1 to 5 carbon atoms,
R² independently of one another, being H, an alkyl group having 1 to 5 carbon atoms, COOM or CH₂COOM;
R³, independently of one another, being H, CH₃, COOM or CH₂COOM;
M being H, a C₁-C₅ alkyl radical, alkali metal, alkaline earth metal or other di- or trivalent metal atoms, ammonium, an organic ammonium group or a mixture thereof;
and R⁵, independently of one another, being 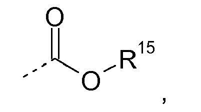 R¹⁵ being -[(R¹¹O)ₓ-(R¹²O)_{y}-(R¹³O)_{z}]-R¹⁴;
R¹¹, R¹² and R¹³, in each case independently of one another, being a C₂-C₄ alkylene group with an order of the (R¹¹O), (R¹²O) and (R¹³O) units in any possible sequence;
R¹⁴ being H, a C₁-C₁₂ alkyl or cycloalkyl radical, a C₇-C₂₀ alkylaryl or aralkyl radical, or a substituted or unsubstituted aryl radical;
x, y, z, independently of one another, each having the values 0-250 and x+y+z being 3-250;
R⁶, independently of one another, being H, CH₃, COOM, CH₂COOM or a substituent as defined for R⁵ or R⁷;
R⁷, independently of one another, being a radical of the formula (V); 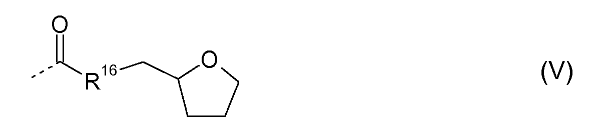 in which R¹⁶, independently of one another, is NH, -NH-(R¹⁷)_{q}-, O, or -O-(R¹⁸)ₛ-, in which R¹⁷ and R¹⁸, in each case independently of one another, are a C₁ - C₁₂ alkylene group or one or more C₂ - C₄ oxyalkylene groups with an order in any possible sequence;
in which *q*, independently of one another, is an integer and has the value 1 if R¹⁷ is a C₁ -C₁₂ alkylene group and in each case has the value 1 - 150 if R¹⁷ is one or more C₂ - C₄ oxyalkylene groups;
in which s, independently of one another, is an integer and has the value 1 if R¹⁸ is a C₁ - C₁₂ alkylene group and in each case has the value 1 - 150 if R¹⁸ is one or more C₂ - C₄ oxyalkylene groups;
R⁸, independently of one another, being H, CH₃, COOM, CH₂COOM or a substituent as defined for R⁵ or R⁷;
R⁹ and R¹⁰ together forming a ring which optionally contains oxygen, sulfur or further nitrogen atoms,
or R⁹ and R¹⁰, independently of one another, being H, a C₁-C₁₂ alkyl group, a C₅-C₉ cycloalkyl group, a C₇-C₁₂ aralkyl group, a hydroxyalkyl group or a compound of the formula (VI), (VII) or (VIII),
-R¹⁹-X(R²⁰)ᵣ (VI) 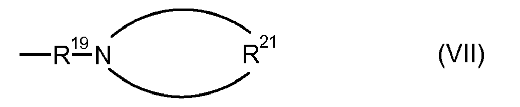
-r(R¹¹'O)_{x'}-(R¹²'O)_{y'}-(R^{13'}O)_{z'}]-R¹⁴ (VIII)
R¹⁹, independently of one another, being an alkylene group and R²⁰ independently of one another, being a C₁- to C₄-alkyl group, and
X, independently of one another, being an S, O or N, where r = 1 if X= S or O, or r = 2 if X = N;
R²¹ being an alkylene group optionally having heteroatoms;
R^{11'}, R^{12'} and R^{13'}, in each case independently of one another, being a C₂-C₄ alkylene group with an order of the (R^{11'}O), (R^{12'}O) and (R^{13'}O) units in any possible sequence;
R^{14'} being a C₁-C₁₂ alkyl or cycloalkyl radical, a C₇-C₂₀ alkylaryl or aralkyl radical, or a substituted or unsubstituted aryl radical; and
x', y', z', independently of one another, having the values 0-100 and x'+y'+z' = 1-100.

9. The polymer **P** as claimed in any of the preceding claims, **characterized in that** R¹ is H or CH₃ and R², R³ and M are H.

10. The polymer **P** as claimed in any of the preceding claims, **characterized in that** R⁶ and R⁸ are H.

11. The polymer **P** as claimed in any of the preceding claims, **characterized in that** R¹⁶ is O or NH.

12. The polymer **P** as claimed in any of claims 1 to 10, **characterized in that** R¹⁶ is OR¹⁸ and R¹⁸ is -(CH₂CH₂O)₂-.

13. The polymer **P** as claimed in any of the preceding claims, **characterized in that** R¹¹, independently of one another, is a C₂-alkylene group, R¹², independently of one another, is a C₃-alkylene group and R¹³, independently of one another, is a C₄-alkylene group, and the order of (R¹¹O), (R¹²O) and (R¹³O) being random, alternating or blockwise.

14. The polymer **P** as claimed in claim 13, **characterized in that** R¹⁵ comprises at least 30 mol% of (R¹¹O) units, preferably from 50 to 100 mol% of (R¹¹O) units, even more preferably from 80 to 100 mol% of (R¹¹O) units, based on the total molar amount of all (R¹¹O), (R¹²O) and (R¹³O) units.

15. The polymer **P** as claimed in any of the preceding claims, comprising from 5 to 95 mol%, preferably from 20 to 80 mol%, of the structural unit **A** of the formula (I), from 1 to 90 mol%, preferably from 15 to 70 mol%, of the structural unit **B** of the formula (II), from 0.001 to 10 mol%, preferably from 0.01 to 6 mol%, of the structural unit C of the formula (III), optionally from 0 to 30 mol%, preferably from 0 to 1 mol%, of the structural unit **D** of the formula (IV), and optionally from 0 to 30 mol%, preferably from 0 to 1 mol%, of the structural unit **E,** based in each case on the total molar amount of the structural units of **A, B, C, D** and **E** in the polymer **P.**

16. The use of a polymer **P** as claimed in any of the preceding claims as a plasticizer for hydraulically setting compositions, in particular for concrete, mortar or gypsum.

17. The use of a polymer **P** as claimed in any of claims 1 to 15 as a dispersant for aqueous dispersions.

18. An admixture in liquid or solid form, comprising at least one polymer **P** as claimed in any of claims 1 to 15.

19. A binder-containing mixture comprising at least one hydraulically setting binder and at least one polymer **P** as claimed in any of claims 1 to 15 in an amount of from 0.01 to 10% by weight, based on the weight of the binder.

20. The mixture as claimed in claim 19, **characterized in that** the binder is selected from the group consisting of cement, a latent hydraulic powder, one or more inert microscopic powders, gypsum or mixtures thereof.

21. The mixture as claimed in either of claims 19 and 20, **characterized in that** the mixture is concrete, mortar or gypsum.

22. A process for the preparation of a binder-containing mixture as claimed in any of claims 19 to 21, **characterized in that** the polymer **P** as claimed in any of claims 1 to 15 is added separately or as a premixed admixture in solid or liquid form.

## Revendications

1. Polymère **P** présentant des groupes ester, comprenant
a) au moins une unité de structure **A** de formule (I) ; 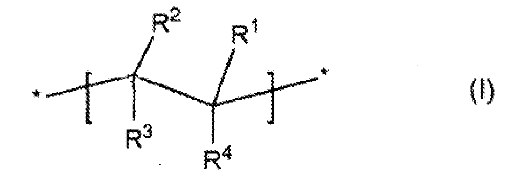
b) au moins une unité de structure **B** de formule (II) ; 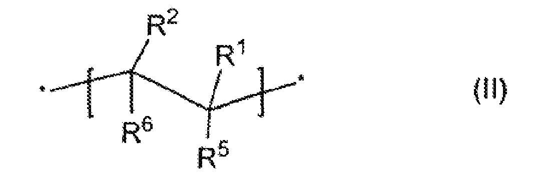
c) au moins une unité de structure **C** de formule (III) ; 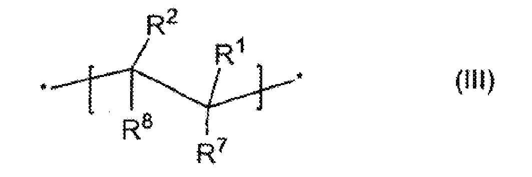 le cas échant
d) au moins une unité de structure **D** de formule (IV) ; 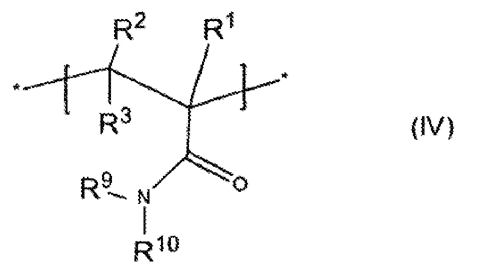 et le cas échéant
e) au moins une unité de structure **E** ;
- où R¹ représente, indépendamment l'un de l'autre, H, CH₂COOM ou un groupe alkyle comprenant 1 à 5 atomes de carbone ;
- où R² représente, indépendamment l'un de l'autre, H, un groupe alkyle comprenant 1 à 5 atomes de carbone, COOM ou CH₂COOM ;
- où R³ signifie, indépendamment l'un de l'autre, H, CH₃, COOM ou CH₂COOM ; et
- où R⁴ signifie, indépendamment l'un de l'autre, COOM ; ou
- où R³ forme avec R⁴ un cycle en -CO-O-CO- ;
- où M représente H, un radical C₁-C₅-alkyle, un métal alcalin, un métal alcalino-terreux ou d'autres atomes métalliques divalents ou trivalents, ammonium, un groupe d'ammonium organique ou un mélange de ceux-ci ;
- où R⁵ représente, indépendamment l'un de l'autre 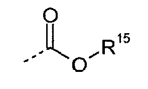
- où R¹⁵ représente -[ (R¹¹O)ₓ-(R¹²O)_{y}-(R¹³O)_{z}]-R¹⁴ ;
- où R¹¹, R¹² et R¹³ signifient, à chaque fois indépendamment l'un de l'autre, un groupe C₂-C₄-alkylène avec un ordre des unités (R¹¹O) , (R¹²O), et (R¹³O) dans n'importe quelle séquence possible ;
- où R¹⁴ représente H, un radical C₁-C₁₂-alkyle ou cycloalkyle, un radical C₇-C₂₀-alkylaryle ou aralkyle, ou un radical aryle substitué ou non substitué ;
- où x, y, z présentent, indépendamment l'un de l'autre, à chaque fois les valeurs 0-250 et x + y + z = 3-250 ;
- où R⁶ représente, indépendamment l'un de l'autre, H, CH₃, COOM, CH₂COOM ou un substituant comme défini pour R⁵ ou R⁷ ;
- où R⁷ représente, indépendamment l'un de l'autre, un radical de formule (V) ; 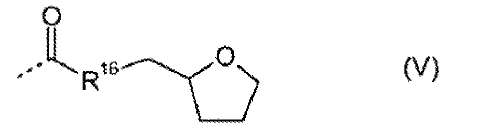
- où R¹⁶ représente, indépendamment l'un de l'autre, NH, -NH-(R¹⁷)_{q}-, O, ou -O-(R¹⁸)ₛ-,
- où R¹⁷ et R¹⁸ représentent à chaque fois indépendamment l'un de l'autre, un groupe C₁-C₁₂-alkylène, ou un ou plusieurs groupes C₂-C₄-oxyalkylène avec un ordre dans n'importe quelle séquence possible ;
- où q représente, indépendamment l'un de l'autre, un nombre entier et vaut 1 lorsque R¹⁷ représente un groupe C₁-C₁₂-alkylène, et vaut 1-150, lorsque R¹⁷ représente un ou plusieurs groupes C₂-C₄-oxyalkylène ;
- où s représente, indépendamment l'un de l'autre, un nombre entier et vaut 1 lorsque R¹⁸ représente un groupe C₁-C₁₂-alkylène, et vaut 1-150, lorsque R¹⁸ représente un ou plusieurs groupes C₂-C₄-oxyalkylène ;
- où R⁸ représente, indépendamment l'un de l'autre, H, CH₃, COOM, CH₂COOM ou un substituant comme défini pour R⁵ ou R⁷ ;
- où R⁹ et R¹⁰ forment ensemble un cycle qui contient le cas échéant des atomes d'oxygène, de soufre ou d'autres atomes d'azote ;
- ou où R⁹ et R¹⁰ représentent indépendamment l'un de l'autre H, un groupe C₁-C₂₀-alkyle, un groupe C₅-C₉-cycloalkyle, un groupe C₇-C₁₂-aralkyle, un groupe hydroxyalkyle ou un composé de formule (VI), (VII) ou (VIII),
-R¹⁹-X(R²⁰)ᵣ (VI) 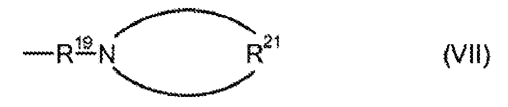
[(R^{11'}O)_{x'}-(R^{12'}O)_{y'}-(R^{13'}O)_{z'}]-R^{14'} (VIII)
- où R¹⁹ représente, indépendamment l'un de l'autre, un groupe alkylène et R²⁰ représente, indépendamment l'un de l'autre, un groupe C₁-C₄-alkyle, et X représente, indépendamment l'un de l' autre, S, O ou N, où r = 1, lorsque X = S ou O, ou r = 2, lorsque X = N ;
- où R²¹ représente un groupe alkylène comprenant le cas échéant des hétéroatomes ;
- où R^{11'}, R^{12'} et R^{13'} signifient, à chaque fois indépendamment l'un de l'autre, un groupe C₂-C₄-alkylène avec un ordre des unités (R^{11'}O), (R^{12'}O) , et (R^{13'}O) dans n'importe quelle séquence possible ;
- où R^{14'} représente un radical C₁-C₁₂-alkyle ou cycloalkyle, un radical C₇-C₂₀-alkylaryle ou aralkyle, ou un radical aryle substitué ou non substitué ;
- où x', y', z' présentent, indépendamment l'un de l'autre, à chaque fois les valeurs 0-100 et x' + y' + z' = 1-100.

2. Polymère **P** selon la revendication 1, pouvant être obtenu par une réaction d'estérification et le cas échéant une amidation d'un poly(acide carboxylique) analogue à un polymère.

3. Polymère **P** selon la revendication 2, pouvant être obtenu par la réaction
a) d'au moins un poly(acide carboxylique) ou un analogue d'un poly(acide carboxylique) ; et
b) d'au moins un composé monohydroxy **F** de formule (IX)
HO- ((R¹¹O)ₓ-(R¹²O)_{y}-(R¹³O)_{z}]-R^{14"} (IX)
- où R¹¹, R¹² et R¹³ signifient, à chaque fois indépendamment l'un de l'autre, un groupe C₂-C₄-alkylène avec un ordre des unités (R¹¹O), (R¹²O), et (R¹³O) dans n'importe quelle séquence possible ;
- où R^{14"} représente un radical C₁-C₁₂-alkyle ou cycloalkyle, un radical C₇-C₂₀-alkylaryle ou aralkyle, ou un radical aryle substitué ou non substitué ;
- où x, y, z présentent, indépendamment l'un de l'autre, à chaque fois les valeurs 0-250 et x + y + z = 3-250 ;
c) d'au moins un composé tétrahydrofurfuryle **G** de formule (X) 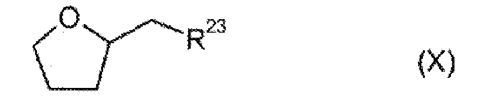
- où R²³ représente, indépendamment l'un de l'autre, -NH₂, -(R¹⁷)_{q}-NH₂, -OH, ou -(R¹⁸)ₛ-OH,
- où R¹⁷ et R¹⁸ représentent à chaque fois indépendamment l'un de l'autre, un groupe C₁-C₁₂-alkylène, ou un ou plusieurs groupes C₂-C₄-oxyalkylène avec un ordre dans n'importe quelle séquence possible ;
- où q représente, indépendamment l'un de l'autre, un nombre entier et vaut 1 lorsque R¹⁷ représente un groupe C₁-C₁₂-alkylène, et vaut 1-150, lorsque R¹⁷ représente un ou plusieurs groupes C₂-C₄-oxyalkylène ;
- où s représente, indépendamment l'un de l'autre, un nombre entier et vaut 1 lorsque R¹⁸ représente un groupe C₁-C₁₂-alkylène, et vaut 1-150, lorsque R¹⁸ représente un ou plusieurs groupes C₂-C₄-oxyalkylène ; et
le cas échant
d) d'au moins un composé amine **H** de formule (XI)
R^{9'}-NH-R^{10'} (XI)
et/ou d'au moins un composé amine **H'** de formule (XI')
R^{9"}-NH-R^{10"} (XI')
- où R^{9'} et R^{10'} forment ensemble un cycle qui contient le cas échéant des atomes d'oxygène, de soufre ou d'autres atomes d'azote ;
- ou où R^{9'} et R^{10'} représentent indépendamment l'un de l'autre H, un groupe C₈-C₂₀-alkyle, un groupe C₅-C₉-cycloalkyle, un groupe C₇-C₁₂-aralkyle ou un composé de formule (VI), (VII) ou (VIII),
- où R^{9"} et R^{10"} forment ensemble un cycle qui contient le cas échéant des atomes d'oxygène, de soufre ou d'autres atomes d'azote ;
- ou où R^{9''} et R^{10"} représentent indépendamment l'un de l'autre H, un groupe C₁-C₁₂-alkyle, un groupe C₅-C₉-cycloalkyle, un groupe C₇-C₁₂-aralkyle, un groupe hydroxyalkyle ou un composé de formule (VI), (VII) ou (VIII),
-R¹⁹-X(R²⁰)r (VI) 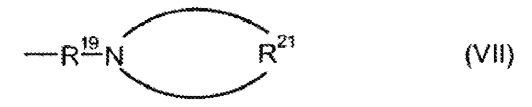
-[(R^{11'}O)ₓ-(R^{12'}O)_{y}-(R^{13'}O)_{z'}]-R^{14'} **(VIII)**
- où R¹⁹ représente, indépendamment l'un de l'autre, un groupe alkylène et R²⁰ représente, indépendamment l'un de l'autre, un groupe C₁-C₄-alkyle, et X représente, indépendamment l'un de l' autre, S, O ou N, où r = 1, lorsque X = S ou O, ou r = 2, lorsque X = N ;
- où R²¹ représente un groupe alkylène comprenant le cas échéant des hétéroatomes ;
- où R^{11'}, R^{12'} et R^{13'} signifient, à chaque fois indépendamment l'un de l'autre, un groupe C₂-C₄-alkylène avec un ordre des unités (R^{11'}O), (R^{12'} O) , et (R^{13'} O) dans n'importe quelle séquence possible ;
- où R^{14'} représente un radical C₁-C₁₂-alkyle ou cycloalkyle, un radical C₇-C₂₀-alkylaryle ou aralkyle, ou un radical aryle substitué ou non substitué ;
- où x', y', z' présentent, indépendamment l'un de l'autre, à chaque fois les valeurs 0-100 et x' + y' + z' = 1-100 ; et
le cas échant
e) d'au moins un autre composé **J.**

4. Polymère **P** selon la revendication 3, **caractérisé en ce qu'**on transforme ledit au moins un poly(acide carboxylique) ou l'analogue d'un poly(acide carboxylique) avec au moins un composé monohydroxy **F** de formule (IX) et au moins un composé tétrahydrofurfuryle **G** de formule (X) et le cas échéant au moins un composé amine **H** de formule (XI) et le cas échéant au moins un autre composé **J** à une température jusqu'à 200°C, de manière telle que des groupes anhydride se forment et **en ce que** dans une deuxième étape les groupes anhydride formés dans la première étape sont transformés totalement ou partiellement avec un composé amine **H'** de formule (XI') à des températures nettement inférieures à 100°C en amide.

5. Polymère **P** selon la revendication 3 ou 4, **caractérisé en ce que** l'analogue du poly(acide carboxylique) est choisi dans le groupe formé par les sels d'acide, les halogénures d'acide, les anhydrides d'acide et les esters d'acide.

6. Polymère **P** selon l'une quelconque des revendications 3 à 5, **caractérisé en ce que** le poids moléculaire dudit au moins un composé hydroxy **F** de formule (IX) est d'environ 120-20 000 g/mole, en particulier d'environ 250-10 000 g/mole.

7. Polymère **P** selon la revendication 1, pouvant être obtenu par ou préparé au moyen d'une réaction de polymérisation radicalaire.

8. Polymère **P** selon la revendication 7, pouvant être obtenu par la réaction de polymérisation, en présence d'au moins un agent de formation de radicaux,
a) d'au moins un acide monocarboxylique ou dicarboxylique éthyléniquement insaturé **M** ou d'un analogue d'un acide monocarboxylique ou dicarboxylique insaturé ; et
b) d'au moins un dérivé d'acide carboxylique éthyléniquement insaturé **K** de formule (XIII) ; 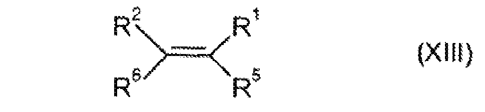 et
c) d'au moins un deuxième dérivé d'acide carboxylique éthyléniquement insaturé **L** de formule (XIV) ; 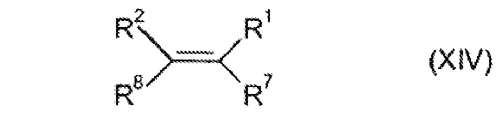 et le cas échéant
d) d'au moins un troisième dérivé d'acide carboxylique éthyléniquement insaturé **N** de formule (XV) ; 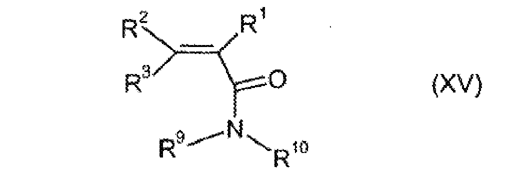 et le cas échéant
e) d' au moins un autre composé éthyléniquement insaturé **Q,**
- où R¹ représente, indépendamment l'un de l'autre, H, CH₂COOM ou un groupe alkyle comprenant 1 à 5 atomes de carbone ;
- où R² représente, indépendamment l'un de l'autre, H, un groupe alkyle comprenant 1 à 5 atomes de carbone, COOM ou CH₂COOM ;
- où R³ signifie, indépendamment l'un de l'autre, H, CH₃, COOM ou CH₂COOM ; et
- où M représente H, un radical C₁-C₅-alkyle, un métal alcalin, un métal alcalino-terreux ou d'autres atomes métalliques divalents ou trivalents, ammonium, un groupe d'ammonium organique ou un mélange de ceux-ci ;
- où R⁵ représente, indépendamment l'un de l'autre 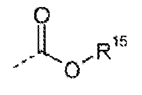
- où R¹⁵ représente - [(R¹¹O)ₓ-(R¹²O)_{y}(R¹³O)_{z}]-R¹⁴ ;
- où R¹¹, R¹² et R¹³ signifient, à chaque fois indépendamment l'un de l'autre, un groupe C₂-C₄-alkylène avec un ordre des unités (R¹¹O) , (R¹²O) , et (R¹³O) dans n'importe quelle séquence possible ;
- où R¹⁴ représente H, un radical C₁-C₁₂-alkyle ou cycloalkyle, un radical C₇-C₂₀-alkylaryle ou aralkyle, ou un radical aryle substitué ou non substitué ;
- où x, y, z présentent, indépendamment l'un de l' autre, à chaque fois les valeurs 0-250 et x + y + z = 3-250 ;
- où R⁶ représente, indépendamment l'un de l'autre, H, CH₃, COOM, CH₂COOM ou un substituant comme défini pour R⁵ ou R⁷ ;
- où R⁷ représente, indépendamment l'un de l'autre, un radical de formule (V) ; 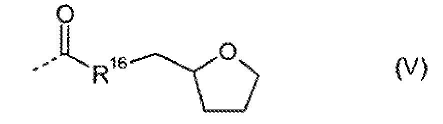
- où R¹⁶ représente, indépendamment l'un de l'autre, NH, -NH-(R¹⁷)_{q}-, O, ou -O-(R¹⁸)ₛ-,
- où R¹⁷ et R¹⁸ représentent à chaque fois indépendamment l'un de l'autre, un groupe C₁-C₁₂-alkylène, ou un ou plusieurs groupes C₂-C₄-oxyalkylène avec un ordre dans n'importe quelle séquence possible ;
- où q représente, indépendamment l'un de l'autre, un nombre entier et vaut 1 lorsque R¹⁷ représente un groupe C₁-C₁₂-alkylène, et vaut 1-150, lorsque R¹⁷ représente un ou plusieurs groupes C₂-C₄-oxyalkylène ;
- où s représente, indépendamment l'un de l'autre, un nombre entier et vaut 1 lorsque R¹⁸ représente un groupe C₁-C₁₂-alkylène, et vaut 1-150, lorsque R¹⁸ représente un ou plusieurs groupes C₂-C₄-oxyalkylène ;
- où R⁸ représente, indépendamment l'un de l'autre, H, CH₃, COOM, CH₂COOM ou un substituant comme défini pour R⁵ ou R⁷ ;
- où R⁹ et R¹⁰ forment ensemble un cycle qui contient le cas échéant des atomes d'oxygène, de soufre ou d'autres atomes d'azote ;
- ou où R⁹ et R¹⁰ représentent indépendamment l'un de l' autre H, un groupe C₁-C₁₂-alkyle, un groupe C₅-C₉-cycloalkyle, un groupe C₇-C₁₂-aralkyle, un groupe hydroxyalkyle ou un composé de formule (VI), (VII) ou (VIII),
**-R¹⁹-X(R²⁰)ᵣ** **(VI)** 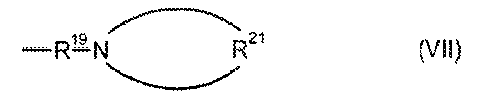
**-(R^{11'}O)_{x'}-(R¹²'O)_{v'}-(R^{13'}O)_{z'}]-R^{14'}** **(VIII)**
- où R¹⁹ représente, indépendamment l'un de l'autre, un groupe alkylène et R²⁰ représente, indépendamment l'un de l'autre, un groupe C₁-C₄-alkyle, et X représente, indépendamment l'un de l' autre, S, O ou N, où r = 1, lorsque X = S ou O, ou r = 2, lorsque X = N ;
- où R²¹ représente un groupe alkylène comprenant le cas échéant des hétéroatomes ;
- où R¹¹, R^{12'} et R^{13'} signifient, à chaque fois indépendamment l'un de l'autre, un groupe C₂-C₄-alkylène avec un ordre des unités (R^{11'}O), (R^{12'}O) , et (R^{13'}O) dans n'importe quelle séquence possible ;
- où R^{14'} représente un radical C₁-C₁₂-alkyle ou cycloalkyle, un radical C₇-C₂₀-alkylaryle ou aralkyle, ou un radical aryle substitué ou non substitué ;
- où x', y', z' présentent, indépendamment l'un de l'autre, à chaque fois les valeurs 0-100 et x' + y' + z' = 1-100.

9. Polymère **P** selon l'une quelconque des revendications précédentes, **caractérisé en ce que** R¹ représente H ou CH₃ et R², R³ et M représentent H.

10. Polymère **P** selon l'une quelconque des revendications précédentes, **caractérisé en ce que** R⁶ et R⁸ représentent H.

11. Polymère **P** selon l'une quelconque des revendications précédentes, **caractérisé en ce que** R¹⁶ représente O ou NH.

12. Polymère **P** selon l'une quelconque des revendications 1 à 10, **caractérisé en ce que** R¹⁶ représente OR¹⁸ et R¹⁸ représente - (CH₂CH₂O)₂-.

13. Polymère **P** selon l'une quelconque des revendications précédentes, **caractérisé en ce que** R¹¹ représente, indépendamment l'un de l'autre, un groupe C₂-alkylène, R¹² représente, indépendamment l'un de l'autre, un groupe C₃-alkylène et R¹³ représente, indépendamment l'un de l'autre, un groupe C₄-alkylène, et où l'ordre de (R¹¹O), (R¹²O) et (R¹³O) est aléatoire, alterné ou par blocs.

14. Polymère **P** selon la revendication 13, **caractérisé en ce que** R¹⁵ comprend au moins 30% en mole d'unités (R¹¹O) , de préférence 50 à 100% en mole d'unités (R¹¹O), encore plus préférablement 80 à 100% en mole d'unités (R¹¹O) , par rapport à la quantité molaire totale de toutes les unités (R¹¹O) , (R¹²O) et (R¹³O) .

15. Polymère **P** selon l'une quelconque des revendications précédentes, comprenant 5 à 95% en mole, de préférence 20 à 80% en mole de l'unité de structure **A** de formule (I), 1 à 90% en mole, de préférence 15 à 70% en mole de l'unité de structure **B** de formule (II), 0,001 à 10% en mole, de préférence 0,01 à 6% en mole de l'unité de structure **C** de formule (III), le cas échéant 0 à 30% en mole, de préférence 0 à 1% en mole de l'unité de structure **D** de formule (IV), et le cas échéant 0 à 30% en mole, de préférence 0 à 1% en mole de l'unité de structure **E,** à chaque fois par rapport à la quantité molaire totale des unités de structure **A, B, C, D** et **E** dans le polymère **P.**

16. Utilisation d'un polymère **P** selon l'une quelconque des revendications précédentes comme fluidifiant pour des compositions à prise hydraulique, en particulier pour le béton, le mortier ou le plâtre.

17. Utilisation d'un polymère **P** selon l'une quelconque des revendications 1 à 15 comme dispersant pour des dispersions aqueuses.

18. Additif sous forme liquide ou solide, comprenant au moins un polymère **P** selon l'une quelconque des revendications 1 à 15.

19. Mélange contenant un liant, comprenant au moins un liant à prise hydraulique et au moins un polymère **P** selon l'une quelconque des revendications 1 à 15 en une quantité de 0,01 à 10% en poids par rapport au poids du liant.

20. Mélange selon la revendication 19, **caractérisé en ce que** le liant est choisi dans le groupe constitué par le ciment, une poudre hydraulique latente, une ou plusieurs poudres microscopiques inertes, le plâtre ou leurs mélanges.

21. Mélange selon l'une quelconque des revendications 19 ou 20, **caractérisé en ce que** le mélange est du béton, du mortier ou du plâtre.

22. Procédé pour la préparation d'une mélange contenant un liant selon l'une quelconque des revendications 19 à 21, **caractérisé en ce que** le polymère **P** selon l'une quelconque des revendications 1 à 15 est ajouté séparément ou sous forme prémélangée comme additif, sous forme solide ou liquide.
